(19) Europäisches Patentamt
European Patent Office
Office européen des brevets

(11) EP 4 657 051 A1

(12) **EUROPEAN PATENT APPLICATION**
published in accordance with Art. 153(4) EPC

(43) Date of publication:
**03.12.2025 Bulletin 2025/49**

(21) Application number: **24747111.3**

(22) Date of filing: **11.01.2024**

(51) International Patent Classification (IPC):
***G01N 23/18*** (2018.01)     ***G01N 23/046*** (2018.01)
***G01N 23/087*** (2018.01)

(52) Cooperative Patent Classification (CPC):
**G01N 23/046; G01N 23/087; G01N 23/18**

(86) International application number:
**PCT/JP2024/000434**

(87) International publication number:
**WO 2024/157780 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.01.2023 JP 2023008367**

(71) Applicant: **FUJIFILM Corporation
Tokyo 106-8620 (JP)**

(72) Inventor: **KATSUYAMA, Kimito
Tokyo 106-8620 (JP)**

(74) Representative: **Meissner Bolte Partnerschaft
mbB
Patentanwälte Rechtsanwälte
Postfach 86 06 24
81633 München (DE)**

(54) **INFORMATION PROCESSING DEVICE, INFORMATION PROCESSING METHOD, AND INFORMATION PROCESSING PROGRAM**

(57)     An information processing apparatus acquires projection data obtained by irradiating an inspection target with radiation, and identifies an imaging position of the projection data, based on the projection data, attenuation information of the inspection target, and shape information of the inspection target.

## FIG. 5

```
            ┌─────────┐
            │  START  │
            └─────────┘
                 │
                 ▼
   ┌─────────────────────────────────────┐
   │ IMAGING POSITION IDENTIFICATION PROCESS │ ──── S10
   └─────────────────────────────────────┘
                 │
                 ▼
   ┌─────────────────────────────────────┐
   │    DEFECT IDENTIFICATION PROCESS     │ ──── S12
   └─────────────────────────────────────┘
                 │
                 ▼
            ┌─────────┐
            │   END   │
            └─────────┘
```

EP 4 657 051 A1

**Description**

Technical Field

The present disclosure relates to an information processing apparatus, an information processing method, and an information processing program.

Background Art

One known nondestructive inspection technique for detecting a defect in an inspection target such as a machine part or a structure without destroying the inspection target is a technique for irradiating the inspection target with radiation such as X-rays to detect a defect in the inspection target. One known nondestructive inspection technique using radiation is a technique for identifying the three-dimensional position of a defect by irradiating an inspection target with radiation from a plurality of different directions to acquire projection data and generating a tomographic image of the internal structure of the inspection target.

Another known method involves acquiring an X-ray image of an inspection target, acquiring, from among a plurality of simulation X-ray images that simulate different shapes of the inspection target, a simulation X-ray image that simulates the shape closest to that of the inspection target, and detecting a defect in the inspection target based on a difference between the X-ray image and the simulation X-ray image (see JP2014-16239A).

SUMMARY OF THE INVENTION

Technical Problem

When generating a tomographic image of an inspection target or detecting a defect in the inspection target based on projection data of the inspection target, an imaging position of the projection data may be required. For this reason, it is desirable to accurately identify an imaging position of projection data.

The present disclosure provides an information processing apparatus, an information processing method, and an information processing program that enable accurate identification of an imaging position of projection data.

Solution to Problem

A first aspect of the present disclosure provides an information processing apparatus including at least one processor, the processor being configured to acquire projection data obtained by irradiating an inspection target with radiation; and identify an imaging position of the projection data, based on the projection data, attenuation information of the inspection target, and shape information of the inspection target.

An information processing apparatus according to a second aspect of the present disclosure may be the information processing apparatus according to the first aspect, in which the processor may be configured to generate virtual projection data obtained when inspection target is irradiated with the radiation, based on the attenuation information and the shape information of the inspection target; and identify the imaging position of the projection data, based on the projection data and the virtual projection data.

An information processing apparatus according to a third aspect of the present disclosure may be the information processing apparatus according to the second aspect, in which the processor may be configured to identify the imaging position of the projection data, based on a similarity between the projection data and the virtual projection data.

An information processing apparatus according to a fourth aspect of the present disclosure may be the information processing apparatus according to the second aspect, in which the processor may be configured to generate the virtual projection data, based on a scattered radiation component generated by the inspection target.

An information processing apparatus according to a fifth aspect of the present disclosure may be the information processing apparatus according to the second aspect, in which the processor may be configured to remove a low-frequency component from each of the projection data and the virtual projection data.

An information processing apparatus according to a sixth aspect of the present disclosure may be the information processing apparatus according to the second aspect, in which the processor may be configured to generate the virtual projection data, based on a length of a path along which the radiation is transmitted through the inspection target.

An information processing apparatus according to a seventh aspect of the present disclosure may be the information processing apparatus according to the first aspect, in which the attenuation information may include attenuation information corresponding to each of at least two members included in inspection target.

An information processing apparatus according to an eighth aspect of the present disclosure may be the information processing apparatus according to the first aspect, in which the attenuation information may include attenuation information of air.

An information processing apparatus according to a ninth aspect of the present disclosure may be the information processing apparatus according to the first aspect, in which the attenuation information may include attenuation information for at least two energy bands.

A tenth aspect of the present disclosure provides an information processing method including a process performed by a processor, the process including acquiring projection data obtained by irradiating an inspection target with radiation; and identifying an imaging position of the projection data, based on the projection data, attenuation information of the inspection target, and shape information of the inspection target.

An eleventh aspect of the present disclosure provides an information processing program for causing a processor to perform a process including acquiring projection data obtained by irradiating an inspection target with radiation; and identifying an imaging position of the projection data, based on the projection data, attenuation information of the inspection target, and shape information of the inspection target.

Advantageous Effects of Invention

According to the aspects described above, the information processing apparatus, the information processing method, and the information processing program of the present disclosure enable accurate identification of an imaging position of projection data.

BRIEF DESCRIPTION OF THE DRAWINGS

Fig. 1 is a configuration diagram illustrating an example overall configuration of a defect identification system according to an exemplary embodiment;
Fig. 2 is a perspective view illustrating an example of an inspection target and a defect;
Fig. 3 is a diagram illustrating shape information;
Fig. 4 is a block diagram illustrating an example configuration of an information processing apparatus;
Fig. 5 is a flowchart illustrating an example of a process for identifying the defect in the inspection target, which is executed by the information processing apparatus;
Fig. 6 is a functional block diagram illustrating an example configuration of the information processing apparatus involved in an imaging position identification process;
Fig. 7 is a flowchart depicting an example of the imaging position identification process executed by the information processing apparatus;
Fig. 8A is a diagram illustrating parameters necessary to identify an imaging position for the inspection target;
Fig. 8B is a diagram illustrating a coordinate system for the inspection target;
Fig. 8C is a diagram illustrating an imaging coordinate system;
Fig. 9 is a diagram illustrating an example of linear attenuation information;
Fig. 10A is a diagram illustrating the setting of paths of radiation emitted from a radiation source;
Fig. 10B is a diagram illustrating a path of radiation passing through voxels;
Fig. 11 is a functional block diagram illustrating an example configuration of the information processing apparatus involved in a defect identification process;
Fig. 12 is a flowchart depicting an example of a defect identification process executed by an information processing apparatus according to a first exemplary embodiment;
Fig. 13 is a diagram illustrating the setting of subset numbers and projection data numbers;
Fig. 14 is a flowchart depicting an example of a defect identification process executed by an information processing apparatus according to a second exemplary embodiment; and
Fig. 15 is a diagram illustrating a scattering angle.

DESCRIPTION OF EMBODIMENTS

Hereinafter, an exemplary embodiment of the present disclosure will be described in detail with reference to the drawings. It should be noted that the present exemplary embodiment is not intended to limit the present disclosure. In the present exemplary embodiment, as an example, an embodiment will be described in which a technique for identifying an imaging position according to the present disclosure is applied to a technique for identifying a defect in an inspection target.

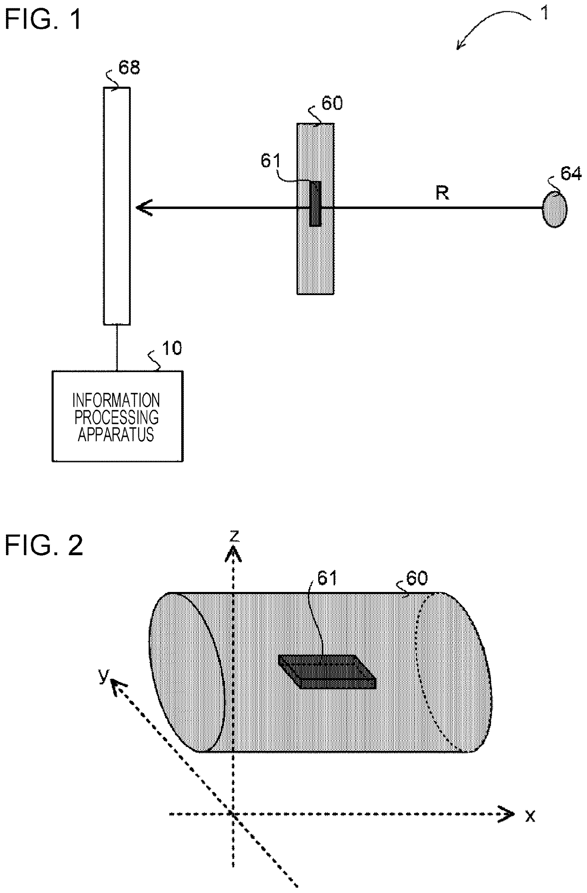

First, an example overall configuration of a defect identification system 1 according to the present exemplary embodiment will be described. Fig. 1 is a block diagram illustrating an example overall configuration of the defect identification system 1 according to the present exemplary embodiment. As illustrated in Fig. 1, the defect identification system 1 according to the present exemplary embodiment includes an information processing apparatus 10, an inspection target 60, a radiation source 64, and a detector 68. While Fig. 1 illustrates one detector 68, the number of detectors 68 included in the defect identification system 1 is not limited. For example, the detector 68 may be provided for each irradiation direction of radiation R. Alternatively, a plurality of detectors 68 may be arranged side by side such that one piece of projection data can be obtained from the plurality of detectors 68.

The information processing apparatus 10 according to the present exemplary embodiment identifies a defect 61 in the inspection target 60 by using at least two pieces of projection data obtained from the detector 68 when the inspection target 60 is irradiated with the radiation R from the radiation source 64 in different directions. As an example, as also illustrated in Fig. 2, the defect 61 identified by the information processing apparatus 10 according to the present exemplary embodiment is present inside the inspection target 60. The information processing apparatus 10 according to the present exemplary embodiment identifies the three-dimensional position or the like of the defect 61 inside the inspection target 60. In Fig. 2, an inspection target having a cylindrical shape is illustrated as the inspection target 60. However, the shape of the inspection target 60 is not limited to a cylindrical shape and may be any shape.

Specifically, the information processing apparatus 10 generates hypothetical virtual projection data corresponding to projection data that is actual measurement data obtained from the detector 68 when the inspection target 60 is irradiated with the radiation R from each of at least two directions, based on attenuation information and shape information of the inspection target 60. Then, the information processing apparatus 10 identifies the three-dimensional position or the like of the defect 61 in the inspection target 60 so that the virtual projection data matches the projection data that is the actual measurement data. In the following description, the term "projection data" refers to actual measurement data obtained from the detector 68.

The attenuation information refers to information on the linear attenuation coefficient of a member included in the inspection target 60 when the inspection target 60 has no defect. The linear attenuation coefficient is the probability of interaction of the radiation R per unit travel distance in the inspection target 60, and is the rate of decrease in the intensity or the number of photons of the radiation R. The linear attenuation coefficient changes depending on the energy of radiation. The radiation R emitted from the radiation source 64 has an energy distribution. Thus, the attenuation information preferably includes information on linear attenuation coefficients for at least two energy bands of the radiation R with which the inspection target 60 is irradiated.

The projection data is the total sum of the energies of a plurality of energy bands of the radiation R incident on each detector 68. The information processing apparatus 10 according to the present exemplary embodiment can accurately identify an imaging position described in detail below, by utilizing information on the linear attenuation coefficients of the inspection target 60 for the plurality of energy bands of the radiation R with which the inspection target 60 is irradiated. Additionally, the information processing apparatus 10 can accurately generate a defect ratio tomographic image described in detail below. As a result, the information processing apparatus 10 according to the present exemplary embodiment can accurately identify the defect 61, including its three-dimensional position.

When passing through the inspection target 60, the radiation R is attenuated due to interactions with the inspection target 60, such as photoelectric effect, coherent scattering (Thomson scattering), incoherent scattering (Compton scattering), and electron pair generation, and a portion of the attenuated radiation is generated as new radiation (scattered radiation).

The detector 68 detects the radiation R (hereinafter referred to as direct radiation) emitted from the radiation source 64 and passing through the inspection target 60, and also detects radiation newly generated (scattered) due to the interactions described above. That is, the projection data obtained from the detector 68 includes data based on the direct radiation as well as data based on the scattered radiation. In other words, the projection data obtained from the detector 68 is affected by the scattered radiation. Thus, the attenuation information preferably includes scattering information in order to reduce the effect of the scattered radiation included in the projection data. The probability of occurrence of scattering and the angle of scattering can be theoretically calculated by using, for example, the Klein-Nishina formula (Klein-Nishina model) for Compton scattering. However, the probability of occurrence of scattering and the angle of scattering vary depending on the type or the like of a member included in the inspection target 60. Thus, the attenuation information preferably includes scattering information of each member included in the inspection target 60.

The probability of occurrence of scattering and the angle of scattering also change depending on the energy of the radiation R to be emitted. Thus, the attenuation information preferably includes scattering information for at least two energy bands. In Compton scattering, the energy after scattering changes depending on the scattering angle, and the attenuation information preferably includes scattering information for at least two energy bands in order to enable calculation of multiple scattering (second-order scattering, third-order scattering, etc.) that occurs after the energy changes. By using the scattering information of the inspection target 60, the information processing apparatus 10 can accurately identify an imaging position described in detail below, and can accurately generate a defect ratio tomographic image described in detail below. As a result, the information processing apparatus 10 according to the present exemplary embodiment can accurately identify the defect 61, including its three-dimensional position.

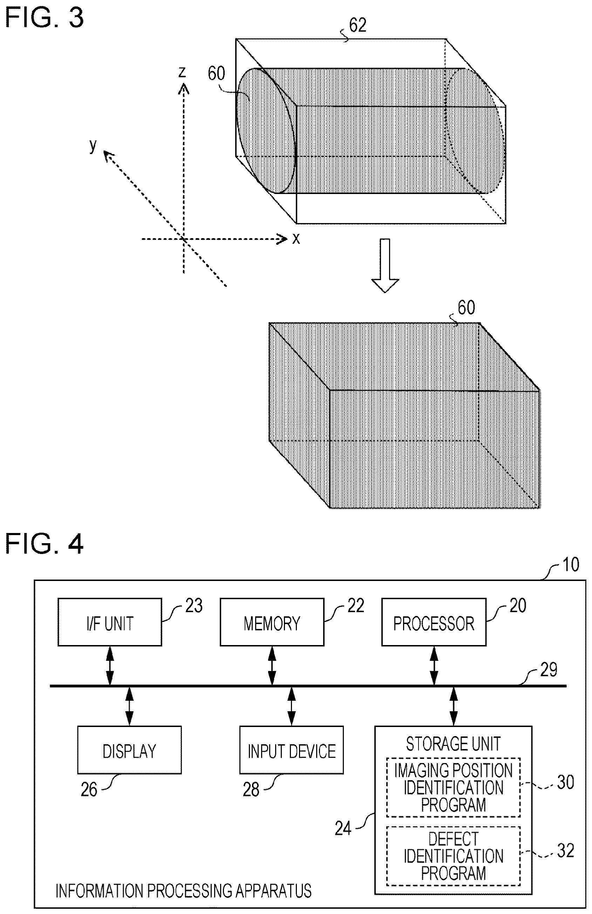

The shape information refers to information on the distribution of the members included in the inspection target 60 in a three-dimensional space when the inspection target 60 does not have the defect 61. Any region that encompasses the entire inspection target 60 may be set and used as the inspection target 60. In this case, the region set to encompass the original inspection target 60 contains a portion that is not included in the original inspection target 60. This portion contains a substance corresponding to the environment where the original inspection target 60 is present. Accordingly, when a region that encompasses the original inspection target 60 is set and used as the inspection target 60, a substance corresponding to the environment where the original inspection target 60 is present is included as a member of the inspection target 60, and information on the distribution of the substance in the three-dimensional space is also included in the shape information. Since air is typically present around the original inspection target 60, air is included as a member of the inspection target 60, and the shape information also includes information on the distribution of air in the three-dimensional space. For example, as illustrated in Fig. 3, a rectangular parallelepiped 62 that encompasses the entire inspection target 60 may be set, and the set rectangular parallelepiped 62 may be used as the inspection target 60. In this case, the members of the inspection target 60 include air, and the shape information also includes information on the distribution of air in the three-dimensional space. In the present exemplary embodiment, as illustrated in Fig. 3, the rectangular parallelepiped 62 including the inspection target 60 is set, and the set rectangular parallelepiped 62 is used as the inspection target 60 to identify a defect.

The combination of attenuation information and shape information is used to obtain information on the distribution of three-dimensional linear attenuation coefficients of the inspection target 60 (for at least two energy bands) (and the distribution of scattering probabilities for the at least two energy bands). In the present exemplary embodiment, information on the distribution of three-dimensional linear attenuation coefficients (and scattering probabilities) of the inspection target 60 is used to identify an imaging position and generate a defect ratio tomographic image described in detail below. The attenuation information and the shape information may be information in any form as long as the information on the distribution of the three-dimensional linear attenuation coefficients (and scattering probabilities) can be obtained. For example, information on the distribution of three-dimensional linear attenuation coefficients (and scattering probabilities) may be used.

In the present exemplary embodiment, furthermore, when the inspection target 60 has the defect 61, information on the linear attenuation coefficient of the defect 61 can be used. In this case, the information on the linear attenuation coefficient of the defect 61 preferably includes information on linear attenuation coefficients for at least two energy bands of the radiation R with which the inspection target 60 is irradiated. By utilizing information on linear attenuation coefficients of a defect (for at least two energy bands), a defect ratio tomographic image described in detail below can be generated with high accuracy. As a result, the information processing apparatus 10 according to the present exemplary embodiment can accurately identify the defect 61, including its three-dimensional position.

Hereinafter, the identification of the defect 61 in the inspection target 60 by the information processing apparatus 10 of the defect identification system 1 according to the present exemplary embodiment will be described in detail for each exemplary embodiment.

First Exemplary Embodiment

Configuration of Information Processing Apparatus

First, the hardware configuration of the information processing apparatus 10 according to the present exemplary embodiment will be described. Fig. 4 is a block diagram illustrating an example hardware configuration of the information processing apparatus 10 according to the present exemplary embodiment. As illustrated in Fig. 4, the information processing apparatus 10 includes a processor 20 such as a central processing unit (CPU), a memory 22, an interface (I/F) unit 23, a storage unit 24, a display 26, and an input device 28. The processor 20, the memory 22, the I/F unit 23, the storage unit 24, the display 26, and the input device 28 are connected to each other via a bus 29, such as a system bus or a control bus, such that various kinds of information can be exchanged.

The processor 20 reads various programs stored in the storage unit 24, including an imaging position identification program 30 and a defect identification program 32, into the memory 22 and executes processes according to the read programs. Accordingly, the processor 20 performs control for identifying the defect 61. The memory 22 is a work memory for the processor 20 to execute a process.

The imaging position identification program 30 and the defect identification program 32 to be executed by the processor 20 are stored in the storage unit 24. Specific examples of the storage unit 24 include a hard disk drive (HDD) and a solid state drive (SSD).

The I/F unit 23 communicates various kinds of information with the detector 68 via wireless or wired communication. The display 26 and the input device 28 function as a user interface. The display 26 provides a user with various kinds of information related to sample analysis. The display 26 is not specifically limited, and examples thereof include a liquid crystal monitor and a light emitting diode (LED) monitor. The input device 28 is operated by the user to input various instructions for identifying the defect 61. The input device 28 is not specifically limited, and examples thereof include a keyboard, a touch pen, and a mouse. The information processing apparatus 10 employs a touch panel display that integrates the display 26 and the input device 28.

Overview of Overall Process

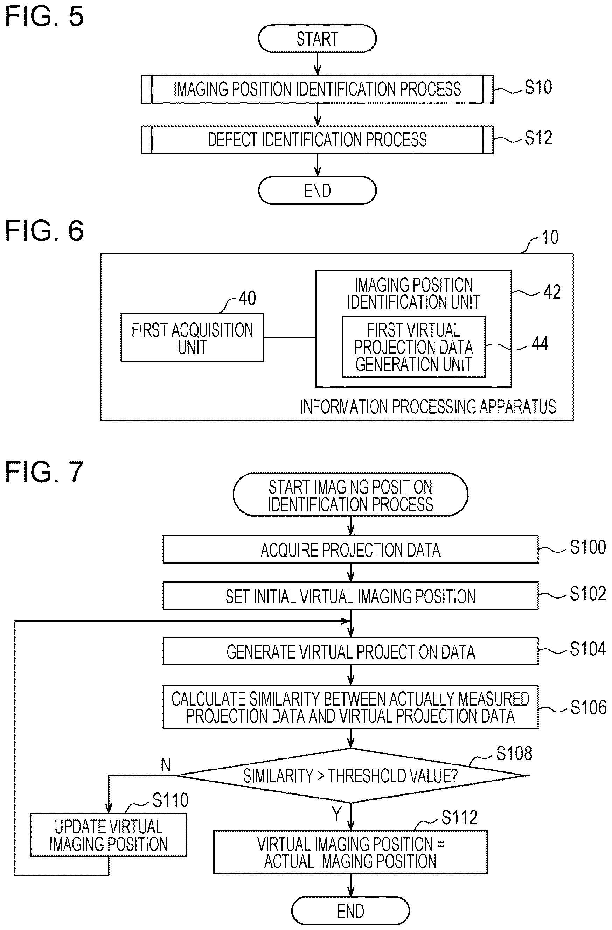

Next, the flow of the overall process performed by the information processing apparatus 10 according to the present exemplary embodiment to identify the defect 61 in the inspection target 60 will be described. Fig. 5 is a flowchart illustrating an example of a process for identifying the defect 61 in the inspection target 60, which is executed by the information processing apparatus 10. The process illustrated in Fig. 5 is executed in response to receipt of, for example, a defect detection instruction input by the user through the input device 28.

In step S10 of Fig. 5, the processor 20 executes an imaging position identification process described in detail below to identify an imaging position. In the present exemplary embodiment, the imaging position refers to a position and attitude in an imaging coordinate system. That is, the imaging position refers to the position (three-dimensional position) of the radiation source 64 with respect to the inspection target 60 and the irradiation direction of the radiation R. In the present exemplary embodiment, since the imaging position is unknown, first, in step S10, the imaging position is identified. If the imaging position is known, the processing of step S10 can be omitted.

Next, in step S12, the processor 20 executes a defect identification process described in detail below to identify the defect 61.

As described above, in the information processing apparatus 10 according to the present exemplary embodiment, the defect 61 is identified through two steps: the imaging position identification process and the defect identification process. The details of each process will be described hereinafter.

Imaging Position Identification Process

The imaging position identification process described above will be described.

First, the configuration of the information processing apparatus 10 involved in the imaging position identification process will be described. Fig. 6 is a functional block diagram illustrating an example configuration of the information processing apparatus 10 involved in the imaging position identification process. As illustrated in Fig. 6, the information processing apparatus 10 includes a first acquisition unit 40 and an imaging position identification unit 42. When the processor 20 executes the imaging position identification program 30, the processor 20 functions as the first acquisition unit 40 and the imaging position identification unit 42. The imaging position identification program 30 according to the present exemplary embodiment is an example of an information processing program of the present disclosure.

The first acquisition unit 40 has a function of acquiring a plurality of pieces of projection data obtained from the detector 68 when the inspection target 60 is irradiated with the radiation R in different directions from the radiation source 64. As an example, in the information processing apparatus 10 according to the present exemplary embodiment, after imaging of the inspection target 60 is performed, a plurality of pieces of projection data with different irradiation directions of the radiation R are acquired from the detector 68 at any timing and stored in the storage unit 24. In addition, when performing the imaging position identification process, the first acquisition unit 40 acquires the plurality of pieces of projection data with different irradiation directions of the radiation R, which are stored in the storage unit 24, and outputs the plurality of pieces of projection data to the imaging position identification unit 42.

As illustrated in Fig. 6, the imaging position identification unit 42 includes a first virtual projection data generation unit 44. The first virtual projection data generation unit 44 has a function of generating virtual projection data obtained when the inspection target 60 is irradiated with the radiation R, based on the attenuation information and the shape information of the inspection target 60. In other words, the first virtual projection data generation unit 44 generates hypothetical virtual projection data of the inspection target 60 corresponding to each of the plurality of pieces of projection data acquired by the first acquisition unit 40, through simulation based on the attenuation information and the shape information of the inspection target 60. Further, different imaging positions (hereinafter referred to as virtual imaging positions) are used in the simulation, and the first virtual projection data generation unit 44 generates virtual projection data for each of the virtual imaging positions.

The imaging position identification unit 42 has a function of identifying, based on the plurality of pieces of projection data acquired by the first acquisition unit 40 and a plurality of pieces of virtual projection data generated by the first virtual projection data generation unit 44 so as to correspond to the respective pieces of projection data, an imaging position of each of the pieces of projection data. Specifically, the imaging position identification unit 42 identifies, as an actual imaging position, a virtual imaging position corresponding to virtual projection data for each of the plurality of pieces of projection data when the similarity between the virtual projection data and the projection data is higher than a threshold value.

Next, the operation involved in the imaging position identification process performed by the information processing apparatus 10 according to the present exemplary embodiment will be described in detail. Fig. 7 is a flowchart illustrating an example of the imaging position identification process executed by the information processing apparatus 10 according to the present exemplary embodiment.

In step S100 of Fig. 7, as described above, the first acquisition unit 40 acquires a plurality of pieces of projection data from the storage unit 24 and outputs the plurality of pieces of projection data to the imaging position identification unit 42.

Next, in step S102, the imaging position identification unit 42 sets an initial virtual imaging position.

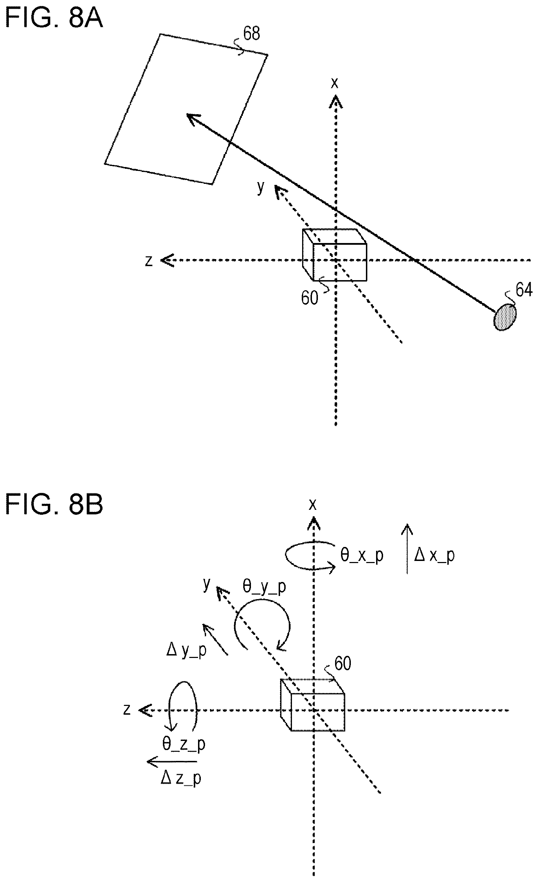

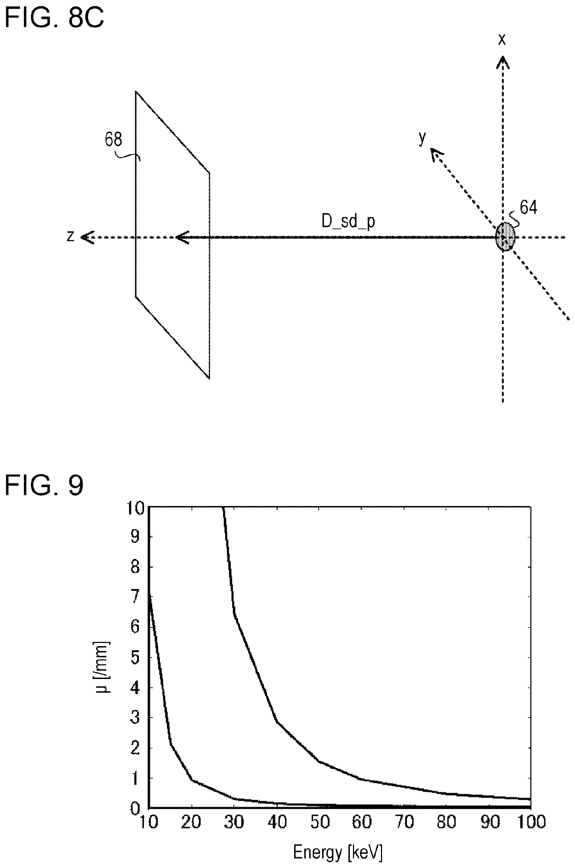

Here, parameters necessary to identify an imaging position for the inspection target 60 will be considered (see Fig. 8A). A coordinate system for the inspection target 60 is set as illustrated in Fig. 8B, and the imaging coordinate system is set as illustrated in Fig. 8C. In the present exemplary embodiment, as illustrated in Figs. 8A to 8C, the projection data is projection data captured by the cone beam method. However, the projection data may be captured by any other scan method. For example, the projection data may be projection data captured by the pencil beam method or the fan beam method.

First, the coordinate system for the inspection target 60 in Fig. 8B is translated in the directions of the x-axis, the y-axis, and the z-axis by approximately $\Delta x\_p$, $\Delta y\_p$, and $\Delta z\_p$, respectively, to allow the origin of the coordinate system to coincide with the position of the radiation source 64 illustrated in Fig. 8C. That is, any position of an imaging system (any position in the imaging coordinate system in Fig. 8C) can be represented by translating the coordinate system for the inspection target 60 in Fig. 8B by approximately $\Delta x\_p$, $\Delta y\_p$, and $\Delta z\_p$.

Next, any attitude of the imaging system (any attitude in the imaging coordinate system in Fig. 8C) can be represented by rotating the coordinate system for the inspection target 60 in Fig. 8B, which has been translated, about the x-axis, the y-axis, and the z-axis by angles $\theta\_x\_p$, $\theta\_y\_p$, and $\theta\_z\_p$, respectively. To be accurate, any attitude of the imaging system can be represented by, in consideration of also the order of rotation about the three axes, first rotating the coordinate system for the inspection target 60 about the z-axis by approximately the angle $\theta\_z\_p$, then rotating it about the y-axis (of the coordinate system rotated about the z-axis) by approximately the angle $\theta\_y\_p$, and finally rotating it about the x-axis (of the coordinate system rotated about the y-axis) by the angle $\theta\_x\_p$.

As described above, the three-dimensional position and attitude of the imaging system with respect to the inspection target 60 can be determined using six parameters, namely, the amounts of translation $\Delta x\_p$, $\Delta y\_p$, and $\Delta z\_p$ and the rotation angles $\theta\_x\_p$, $\theta\_y\_p$, and $\theta\_z\_p$. These six parameters representing the imaging position are set as unknown values to set an initial virtual imaging position. For example, all of the rotation angles $\theta\_x\_p$, $\theta\_y\_p$, and $\theta\_z\_p$ may be set to "0", the amounts of translation $\Delta x\_p$ and $\Delta y\_p$ may also be set to "0", and only the amount of translation $\Delta z\_p$ may be set to a reference value. While a distance $D\_sd\_p$ (see Fig. 8C) from the radiation source 64 to the detector 68 is known here, seven parameters also including the distance $D\_sd\_p$ may be set as unknown values. In this case, the initial value of the distance $D\_sd\_p$ is also set to a reference value.

In the present exemplary embodiment, for convenience of processing, the coordinate system for the inspection target 60 is fixed, and the position and attitude in the imaging coordinate system for each of the plurality of pieces of projection data are represented by translation or rotation.

Next, in step S104, the first virtual projection data generation unit 44 generates virtual projection data. Specifically, the first virtual projection data generation unit 44 generates virtual projection data through simulation based on the attenuation information and the shape information of the inspection target 60 under the conditions of the set virtual imaging position.

First, the first virtual projection data generation unit 44 obtains the distribution of three-dimensional linear attenuation coefficients of the inspection target 60 based on the attenuation information and the shape information of the inspection target 60. As described above, the attenuation information and the shape information may be information in any form as long as the distribution of the three-dimensional linear attenuation coefficients can be obtained, and may be the distribution of the three-dimensional linear attenuation coefficients itself, for example. In the present exemplary embodiment, the attenuation information is represented as f(no_f, no_e), and the shape information is represented as no_f(no_pix). The distribution of the three-dimensional linear attenuation coefficients of the inspection target 60 is represented as a combination of the attenuation information f(no_f, no_e) and the shape information no_f(no_pix). Here, "no_f" represents an identification number of a member included in the inspection target 60, and a member with the identification number no_f is referred to as a "member no_f". Further, "no_e" represents an identification number of energy (corresponding to a wavelength) of the radiation R, and energy with the identification number no_e is referred to as "energy no_e". The attenuation information f(no_f, no_e) represents the linear attenuation coefficient of the member no_f at the energy no_e of the radiation R. On the other hand, the shape information no_f(no_pix) represents the member no_f in a voxel no_pix. The total number of voxels of the inspection target 60 is represented as num_pix_t, and the voxel no_pix is a value of 1 to num_pix_t. In the present exemplary embodiment, as described above, the inspection target 60 is a rectangular parallelepiped (see Fig. 3). Thus, the region of the rectangular parallelepiped of the inspection target 60 is composed of fine grids (voxels), and the voxels are assigned the numbers 1 to num_pix_t. While the position of each voxel is originally given in three dimensions of x, y, z coordinates, in the present exemplary embodiment, each voxel is assigned a one-dimensional number because an increase in the number of dimensions makes referencing complicated.

Fig. 9 illustrates an example of the linear attenuation coefficient f(no_f, no_e). In Fig. 9, three lines are plotted, which indicate the linear attenuation coefficients of air, aluminum, and iron in order from the smallest to the largest. The values of these linear attenuation coefficients are derived from "Tables of X-Ray Mass Attenuation Coefficients and Mass Energy-Absorption Coefficients from 1 keV to 20 MeV for Elements Z = 1 to 92 and 48 Additional Substances of Dosimetric Interest, NIST, J.H. Hubbell and S.M. Seltzer."

The member numbers no_f of air, aluminum, and iron are represented as 1, 2, and 3, respectively. The member of each voxel of the inspection target 60 is one of these three members. For air, the value of the linear attenuation coefficient may be approximately set to 0.0 at all energies. In other words, the member no_f whose value of the linear attenuation coefficient is 0.0 at all energies is considered to be air.

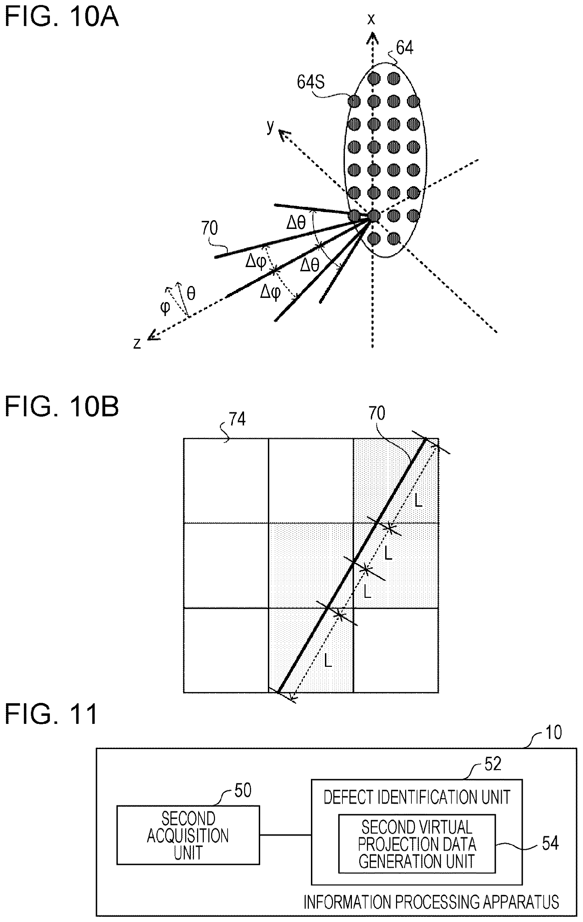

Next, as illustrated in Fig. 10A, a path 70 of the radiation R is set. As illustrated in Fig. 10A, the radiation source 64 is not a point, but has a spatial extent. In other words, to ensure the dose of the radiation R, that is, to ensure the brightness or the density difference of the projection data, the radiation source 64 has a certain size. Due to the extent of the radiation source 64, blurring occurs in the projection data. To accurately simulate projection data including such blurring and generate virtual projection data, it is preferable to set the path 70 of the radiation R on the premise of the spatial extent of the radiation source 64. In Fig. 10A, a plurality of (in Fig. 10A, 28) radiation sources 64S are set at three-dimensional predetermined intervals within a predefined region (the radiation source 64) that is spread in a three-dimensional space, and the paths 70 of the radiation R from each of the radiation sources 64S are set.

As illustrated in Fig. 10A, the paths 70 of the radiation R are set at equal intervals with minute angles in two orthogonal directions from the radiation source 64. As illustrated in Fig. 10B, the first virtual projection data generation unit 44 identifies voxels 74 through which each of the paths 70 passes. In the example illustrated in Fig. 10B, the path 70 passes through four voxels 74. For each voxel 74, the intensity of the radiation R emitted from the radiation source 64S is attenuated based on the linear attenuation coefficient and a path length L to determine the incident intensity for the detector 68. Further, the first virtual projection data generation unit 44 integrates, for each detector 68, the intensity of the radiation R incident on the detector 68 along each path 70 and generates virtual projection data. In Fig. 10B, the path 70 of the radiation R in the three-dimensional space and the three-dimensional voxels 74 are represented in two dimensions for simplicity. In Fig. 10A, angles in two directions are represented as $\theta$ and $\varphi$, and any direction is represented as a combination ($\theta$, $\varphi$). When the minute angles are represented as $\Delta\theta$ and $\Delta\varphi$, the respective paths 70 are set in the following directions.

$$..., (-\Delta\theta, -2\times\Delta\varphi/\cos(\Delta\theta)), (-\Delta\theta, -\Delta\varphi/\cos(\Delta\theta)), (-\Delta\theta, 0), (-\Delta\theta, +\Delta\varphi/\cos(\Delta\theta)), (-\Delta\theta, +2\times\Delta\varphi/\cos(\Delta\theta)), ...$$

$$..., (0, -2\times\Delta\varphi), (0, -\Delta\varphi), (0, 0), (0, +\Delta\varphi), (0, +2\times\Delta\varphi), ...$$

$$..., (+\Delta\theta, -2\times\Delta\varphi/\cos(\Delta\theta)), (+\Delta\theta, -\Delta\varphi/\cos(\Delta\theta)), (+\Delta\theta, 0), (+\Delta\theta, +\Delta\varphi/\cos(\Delta\theta)), (+\Delta\theta, +2\times\Delta\varphi/\cos(\Delta\theta)), ...$$

To equalize the ranges of the minute solid angles centered on the respective paths 70, in the expressions above, the minute angle $\Delta\varphi$ in the angle $\theta$ is corrected to $\Delta\varphi/\cos(\theta)$ (the range of $\theta$ is set to -90 degrees to +90 degrees, and $\Delta\varphi$ is corrected to increase as the absolute value of $\theta$ increases). In Fig. 10A, as the number of paths 70 is increased, or in other words, as the angles $\Delta\theta$ and $\Delta\varphi$ are set to be smaller, the virtual projection data can be simulated with higher accuracy, but more calculation time is required. The intensity I of the radiation R incident on the detector 68 along each path 70 is determined using Formula (1) below.

$$I = (e(1) \times I\_e(1)) + (e(2) \times I\_e(2)) + ... + (e(num\_e) \times I\_e(num\_e)) ... (1)$$

In Formula (1) above, e(1), e(2), ..., and e(num_e) indicate energies and are known. As given in Formula (1), the intensity I is the total energy of photons having num_e types of energy incident on the detector.

The intensity I_e(no_e) of the radiation R at the energy e(no_e) in Formula (1) above is determined using Formula (2) below.

$$I\_e(no\_e) = I0\_e(no\_e) \times \exp(-\{f(no\_f(no\_pix(1)), no\_e) \times plen\_pix(1)) + (f(no\_f(no\_pix(2)), no\_e) \times plen\_pix(2)) + ... + (f(no\_f(no\_pix(num\_pix)), no\_e) \times plen\_pix(num\_pix)\}) ... (2) \qquad (2)$$

Formula (2) above represents the intensity I_e(no_e) of the radiation R with the intensity I0_e(no_e) at the energy e(no_e) emitted from the radiation source 64S, passing through the voxels 74 while being attenuated, and incident on the detector 68.

In Formula (2) above, f(no_f(no_pix(no_pix_path)), no_e) represents a linear attenuation coefficient f at the energy no_e of the member no_f for the (no_pix_path)-th voxel no_pix through which the path 70 passes, and plen_pix(no_pix_path) represents a path length plen_pix in the (no_pix_path)-th voxel no_pix through which the path 70 passes.

The intensity I0_e(no_e) in Formula (2) above represents, for each path 70 in Fig. 10A, the total sum of the numbers of photons (at the energy e(no_e)) emitted per unit time over minute angular ranges -Δθ/2 to +Δθ/2 and -Δφ/cos(θ)/2 to +Δφ/cos(θ)/2 in two directions centered on the path 70 (ranges in which the solid angles for the respective paths 70 are equal). That is, as the interval of the angles of the paths 70 in Fig. 10A decreases, or in other words, as more paths 70 are set, the intensity I0_e(no_e) is set to a smaller value. I0_e(0), I0_e(1), ..., and I0_e(num_e) are determined by the radiation source 64 and are known.

The intensity of the radiation R along each path 70 incident on the detector 68 is determined using Formula (1) above, and the intensities are integrated for each detector 68. Accordingly, the first virtual projection data generation unit 44 can generate virtual projection data. The detector 68 on which each path 70 is incident can be easily determined in the imaging coordinate system illustrated in Fig. 8C, and a voxel 74 through which each path 70 passes and the path length L in that voxel 74 can be easily determined for each path 70 by determining the direction of the path 70 and the position of the radiation source 64S serving as the starting point of the path 70 in the coordinate system for the inspection target 60 in Fig. 8B. For each path 70, the direction of the path 70 in the coordinate system for the inspection target 60 in Fig. 8B can be determined by inversely rotating the direction of the path 70 in the imaging coordinate system in Fig. 8C based on the rotation angles θ_x_p, θ_y_p, and θ_z_p. The position of the radiation source 64S serving as the starting point of the path 70 in the coordinate system for the inspection target 60 in Fig. 8B can be determined by inversely rotating the position of the radiation source 64S in the imaging coordinate system in Fig. 8C based on the rotation angles θ_x_p, θ_y_p, and θ_z_p and then translating it by Δx_p, Δy_p, and Δz_p.

In the way described above, the first virtual projection data generation unit 44 generates virtual projection data. The virtual projection data is data obtained by simulating the projection data of the inspection target 60 without the defect 61. In the cone beam method, the detectors 68 are arranged two-dimensionally. Thus, the virtual projection data generated by the first virtual projection data generation unit 44 is two-dimensional data.

Next, in step S106, the imaging position identification unit 42 calculates the similarity between the actually measured projection data and the virtual projection data. As described above, the virtual projection data is obtained by simulating the projection data of the inspection target 60 without the defect 61. On the other hand, the inspection target 60 in the actually measured projection data may include the defect 61. If the defect 61 is included, the projection data and the virtual projection data do not completely coincide with each other. However, even if the defect 61 is included, the region occupied by the defect 61 is only a portion of the inspection target 60, and the effect on the entire similarity between both pieces of projection data is small. The difference in imaging positions between actual measurement and simulation has a larger impact on the similarity between both pieces of projection data. Thus, increasing the similarity between the projection data and the virtual projection data beyond the threshold value can cause the imaging positions for actual measurement and simulation to coincide. A variety of well-known indices are common as measures of the similarity (measures for representing the degree of similarity) between two pieces of data. Common examples of similarity measures include sum of squared differences (Sum of Squared Difference (SSD)), sum of absolute differences (Sum of Absolute Difference (SAD)), normalized cross-correlation (Normalized Cross-Correlation (NCC)), ZNCC (Zero-mean Normalized Cross-Correlation), ratio image uniformity (Ratio Image Uniformity), and mutual information (Mutual Information). Any of the well-known similarity measures may be used.

In particular, in the case of the cone beam method, the projection data includes not only direct radiation emitted from the radiation source 64 and attenuated after passing through the inspection target 60 but also scattered radiation generated as new radiation from a portion of the attenuated direct radiation when the direct radiation is attenuated. Accordingly, it is preferable to also simulate scattered radiation to generate virtual projection data in step S104 and calculate the similarity between the projection data and the virtual projection data that considers scattered radiation. However, since the calculation of scattered radiation requires a large amount of computation and takes time, the imaging position identification process may involve calculating the similarity between the actually measured projection data and the virtual projection data, without performing the simulation of scattered radiation, after simply excluding, from the actually measured projection data, low-frequency components of spatial frequency components included in the data and also excluding low-frequency components from the virtual projection data in a similar manner. Since an image caused by scattered radiation is added to the projection data as an image that spatially changes at a low frequency, the image caused by scattered radiation can be preferably excluded by excluding low-frequency components from among spatial frequency components included in the projection data. Even when the low-frequency components are excluded, an edge having a large contribution to the similarity (a portion where the value of the projection data rapidly changes spatially, such as the boundary between the inspection target 60 and the background or the boundary within the inspection target 60) can remain retained. The exclusion of the low-frequency components of the projection data can be implemented by converting the projection data into frequency-domain data by Fourier transform, cutting off the low-frequency components, which are greatly affected by scattered radiation, and returning the projection data to the original projection data by inverse Fourier transform. Alternatively, this operation can be implemented by convolving a filter that transmits medium to high frequency components with the projection data without performing Fourier transform, or in other words, without converting the projection data into frequency-domain data.

If the similarity derived in the way described above is less than or equal to the threshold value (similarity $\leq$ threshold value), the determination in step S108 is negative, and then the process proceeds to step S110. In this case, the set virtual imaging position is not suitable as the actual imaging position.

In step S110, the imaging position identification unit 42 updates the set virtual imaging position. Specifically, the imaging position identification unit 42 updates the six parameters representing the virtual imaging position, namely, the amounts of translation $\Delta x\_p$, $\Delta y\_p$, and $\Delta z\_p$ and the rotation angles $\theta\_x\_p$, $\theta\_y\_p$, and $\theta\_z\_p$. If the distance $D\_sd\_p$ from the radiation source 64S to the detector 68 is also unknown, the seven parameters further including the distance $D\_sd\_p$ are updated. When the processing of step S110 is completed, the process returns to step S104, and the processing of steps S104 to S108 is repeated.

On the other hand, if the similarity is greater than the threshold value in step S108, the determination is positive, and then the process proceeds to step S112.

In step S112, the imaging position identification unit 42 identifies the set virtual imaging position as the actual imaging position. When the processing of step S112 is completed, the imaging position identification process illustrated in Fig. 7 ends.

As described above, a method for repeatedly calculating the evaluation value (in the present exemplary embodiment, the similarity) while updating an unknown parameter to search for a parameter for which an evaluation value is minimum or maximum (in the present exemplary embodiment, maximum) is referred to as an optimization algorithm, a search algorithm, or the like, and a variety of well-known methods are available. Any well-known method may be used to update the six (or seven) parameters. For example, when updated by using the gradient method, first, the six (or seven) parameters are each increased by a small amount, and the similarity between the projection data and the virtual projection data is calculated to determine the difference (change) from the similarity before the increase. For each parameter, the ratio of the change in similarity calculated in the way described above to the small increase in the parameter corresponds to a gradient (partial derivative). Next, based on the gradient (partial derivative) of the similarity for each parameter, each parameter is updated in a direction in which the similarity increases. Since the translation and distance parameters have different units from the rotation parameters, the update step width may be changed. When the parameters are updated by using the gradient method, there is a possibility of converging to a local solution. To eliminate this possibility, first, a predetermined number of candidate values may be set for each parameter within a possible range, and the similarity may be calculated for all combinations of the candidate values for each parameter to determine the combination for which the similarity is maximum. Then, the determined combination may be used as the initial value to determine a parameter for which the similarity is greater than the threshold value by using the gradient method. As another optimization algorithm, a genetic algorithm may be used to determine a parameter for which the similarity is greater than the threshold value. Alternatively, any other optimization algorithm may be used to determine a parameter for which the similarity is greater than the threshold value.

For each of the pieces of projection data corresponding to at least two imaging positions at which the radiation R is emitted from different directions, an imaging position is identified through the imaging position identification process (see Fig. 7). When the relationship between the imaging positions of the respective pieces of projection data is known, that is, when the relationship between the positions and attitudes of the respective pieces of projection data in the imaging coordinate system is known, only the imaging position of one piece of projection data in the coordinate system for the inspection target 60 is identified through the imaging position identification process. Specifically, in the imaging position identification process, an initial value of the imaging position of one piece of projection data is set, the similarity between the projection data and the virtual projection data is calculated, and the virtual imaging position is updated. This process is repeatedly performed to identify a virtual imaging position at which the similarity is greater than the threshold value. In this case, when the imaging position (six parameters: the amounts of translation $\Delta x\_p$, $\Delta y\_p$, and $\Delta z\_p$ and the rotation angles $\theta\_x\_p$, $\theta\_y\_p$, and $\theta\_z\_p$) of one piece of projection data is set for the inspection target 60, the relationship between the imaging position of the one piece of projection data and the imaging positions of all the other pieces of projection data is known. Thus, the imaging positions (six parameters) of all the other pieces of projection data are determined. Accordingly, in step S104 of the imaging position identification process, virtual projection data corresponding to projection data in all the directions is generated. In step S106, the total sum of the similarities between the projection data and the virtual projection data in all the directions is calculated. Then, in step S110, the virtual imaging position (parameters) is updated in a direction in which the total sum of the similarities between the projection data and the virtual projection data in all the directions increases. As a result, through the imaging position identification process, a parameter for which the total sum of the similarities between the projection data and the virtual projection data in all the directions is greater than the threshold value is determined.

On the other hand, when the relationship between the imaging positions of the respective pieces of projection data is unknown, parameters (six or seven) for which the similarity between the projection data and the virtual projection data is greater than the threshold value are determined for each piece of projection data through the imaging position identification process described above (see Fig. 7).

Through the imaging position identification process described above, an imaging position can be identified for each of the pieces of projection data corresponding to at least two imaging positions at which the radiation R is emitted from different directions.

Defect Identification Process

The defect identification process described above will be described. In the following description, variable names used in the imaging position identification process may be redefined as other variables, as needed.

First, the configuration of the information processing apparatus 10 involved in the defect identification process will be described. Fig. 11 is a functional block diagram illustrating an example configuration of the information processing apparatus 10 involved in the defect identification process. As illustrated in Fig. 11, the information processing apparatus 10 includes a second acquisition unit 50 and a defect identification unit 52. When the processor 20 executes the defect identification program 32, the processor 20 functions as the second acquisition unit 50 and the defect identification unit 52.

The second acquisition unit 50 has a function of acquiring a plurality of pieces of projection data obtained from the detector 68 when the inspection target 60 is irradiated with the radiation R in different directions from the radiation source 64. In the present exemplary embodiment, as described above, in the imaging position identification process, the first acquisition unit 40 of the information processing apparatus 10 causes a plurality of pieces of projection data with different irradiation directions of the radiation R to be stored in the storage unit 24. Thus, the second acquisition unit 50 acquires the plurality of pieces of projection data with different irradiation directions of the radiation R from the storage unit 24.

As illustrated in Fig. 11, the defect identification unit 52 includes a second virtual projection data generation unit 54. The second virtual projection data generation unit 54 has a function of generating virtual projection data obtained when the inspection target 60 is irradiated with the radiation R, based on the attenuation information and the shape information of the inspection target 60. The virtual projection data generated by the second virtual projection data generation unit 54 is different from the virtual projection data generated by the first virtual projection data generation unit 44 in the imaging position identification process. As described above, the virtual projection data generated by the first virtual projection data generation unit 44 is virtual projection data of the inspection target 60 without the defect 61. On the other hand, the virtual projection data generated by the defect identification unit 52 is virtual projection data of the inspection target 60 with the defect 61.

The defect identification unit 52 has a function of identifying the defect 61 based on the plurality of pieces of virtual projection data with different irradiation directions of the radiation R generated by the second virtual projection data generation unit 54 and the plurality of pieces of projection data with different irradiation directions of the radiation R acquired by the second acquisition unit 50. Specifically, the defect identification unit 52 generates a defect ratio tomographic image based on the comparison result between the virtual projection data and the projection data, and identifies the three-dimensional position, the size, and the shape of the defect 61 based on the defect ratio tomographic image.

In the present exemplary embodiment, an image of the inside of the inspection target 60 is referred to as a "tomographic image" in contrast to the "projection data" acquired by irradiating the inspection target 60 with the radiation R, and both a two-dimensional image and a three-dimensional image are collectively referred to as a "tomographic image". The "defect ratio tomographic image" is a tomographic image representing the proportion of the defect 61, where the maximum value is 1.0. A higher value indicates a higher likelihood of the defect 61, in the present exemplary embodiment. In the present exemplary embodiment, a three-dimensional defect ratio image is generated as a defect ratio tomographic image. Thus, the defect ratio tomographic image may be hereinafter referred to as a three-dimensional defect ratio image.

Next, the operation involved in the defect identification process performed by the information processing apparatus 10 according to the present exemplary embodiment will be described in detail. Since the imaging position of each piece of projection data is identified for the inspection target 60 through the imaging position identification process described above, various tables used in the defect identification process are generated in advance based on the geometric arrangement of the radiation source 64, the inspection target 60, and the detector 68. As illustrated in Fig. 10A, the paths 70 of the radiation R are set at equal intervals with minute angles in two orthogonal directions from the radiation source 64S, and the detector 68 on which each of the paths 70 is incident is identified. As described above, as more paths 70 are set, or in other words, as the angles $\Delta\theta$ and $\Delta\varphi$ are set to be smaller, the three-dimensional defect ratio image can be generated with higher accuracy, but more calculation time is required. For each detector 68, paths 70 incident on the detector 68 are extracted, and the numbers of paths 70 are tabulated. Then, for each path 70, voxels 74 through which the path 70 passes are extracted, the number of extracted voxels 74 and the numbers of the voxels 74 are tabulated, and path lengths for the respective voxels 74 are determined and tabulated. No need exists to generate a table while distinguishing the plurality of radiation sources 64S illustrated in Fig. 10A. It is sufficient to collectively tabulate the paths 70 from all the radiation sources 64S.

For example, the following tables are generated.

· Table num_path(no_s, no_d): a table for the number of paths 70 incident on the detector no_d in the scan no_s. Note that "no_s" represents the identification number of a scan, and a scan with the identification number no_s is referred to as a "scan no_s". In the present exemplary embodiment, imaging in each direction is referred to as a scan. Further, "no_d" represents the identification number of a detector 68, and a detector 68 with the identification number no_d is referred to as a "detector no_d". As described above, since the detectors 68 according to the present exemplary embodiment are arranged two-dimensionally, "no_d" represents the identification number of the detector 68 in the two-dimensional arrangement.

· Table num_pix(no_s, no_d, no_path): a table for the number of voxels 74 through which the path no_path incident on the detector no_d in the scan no_s passes. "no_path" represents the identification number of a path 70, and a path 70 with the identification number no_path is represented as a "path no_path".

· Table no_pix(no_s, no_d, no_path, no_pix_path): a table for the identification number of the (no_pix_path)-th voxel 74 through which the path no_path incident on the detector no_d in the scan no_s passes. "no_pix_path" represents the identification number of a voxel 74 along the path no_path incident on the detector no_d in the scan no_s, and numbers are assigned in ascending order, starting from the one closest to the radiation source 64.

· Table plen_pix(no_s, no_d, no_path, no_pix_path): a table for path lengths for the (no_pix_path)-th voxel 74 through which the path no_pat incident on the detector no_d in the scan no_s passes.

Further, for each subset (described in detail below) obtained by dividing all scans into several sets (subsets), the total sum of path lengths through each voxel 74 is determined for all the paths 70 incident on all the detectors 68 in all the scans belonging to the subset, and is tabulated.

For example, the following table is generated.

· Table plen_pix_sub(no_sub, no_pix): a table for the total sum of path lengths through the voxel no_pix for all the paths 70 incident on all the detectors 68 in all the scans belonging to a subset no_sub. "no_sub" represents the identification number of a subset, and a subset with the identification number no_sub is referred to as a "subset no_sub".

In the present exemplary embodiment, furthermore, linear attenuation coefficients of the defect 61 are defined in advance as f_d_l(no_e) and f_d_h(no_e). Here, "no_e" represents the identification number indicating an energy band of the radiation R, and "f_d_l(no_e)" represents the linear attenuation coefficient of a defect with a small linear attenuation coefficient at the energy no_e of the radiation R. The linear attenuation coefficient f_d_l of a defect with a small linear attenuation coefficient is assumed to be smaller than the linear attenuation coefficients f of all the members included in the inspection target 60, except for air, at all the energies no_e. Further, "f_d_h(no_e)" represents the linear attenuation coefficient of a defect with a large linear attenuation coefficient at the energy no_e of the radiation R. The linear attenuation coefficient f_d_h of a defect with a large linear attenuation coefficient is assumed to be larger than the linear attenuation coefficients f of all the members included in the inspection target 60, except for air, at all the energies no_e.

Examples of the defect 61 included in the inspection target 60 include blowholes, poor penetration, poor fusion, cracks, and foreign substance, and many of these defects 61 can be considered to be air. It is therefore preferable to set air as defects with small linear attenuation coefficients. The linear attenuation coefficient f_d_l of air is set to a smaller value than the linear attenuation coefficients f of all the members included in the inspection target 60, except for air, at all the energies no_e. In contrast, foreign substance can be set as defects with large linear attenuation coefficients. The linear attenuation coefficient f_d_h of the foreign substance is set to a larger value than the linear attenuation coefficients f of all the members included in the inspection target 60, except for air, at all the energies no_e. If the linear attenuation coefficient of the foreign substance is unknown, or in other words, if the type of the foreign substance is unknown, a hypothetical value is set as the linear attenuation coefficient f_d_h of the foreign substance.

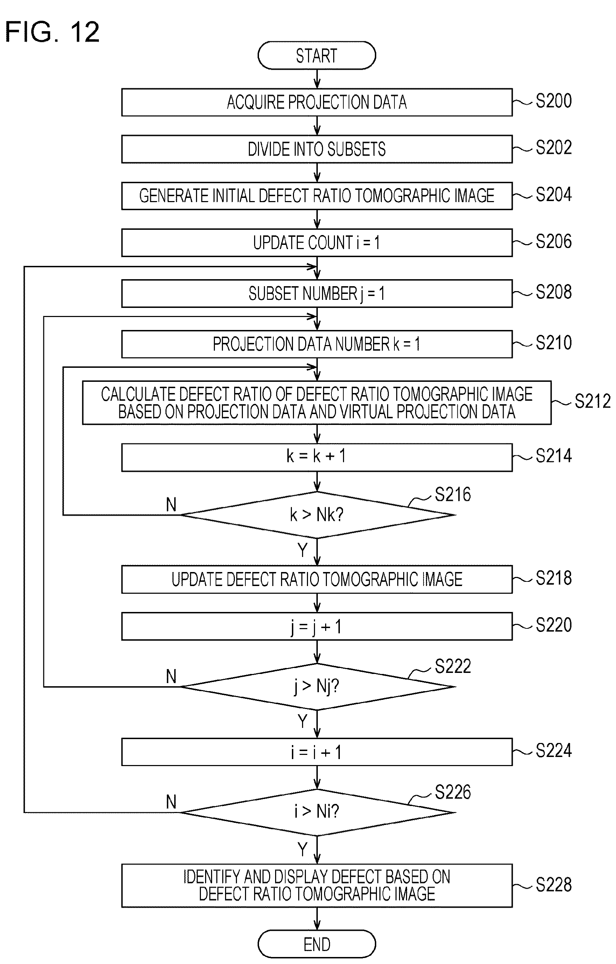

Fig. 12 is a flowchart illustrating an example of the defect identification process executed by the information processing apparatus 10 according to the present exemplary embodiment. In step S200 illustrated in Fig. 12, as described above, the second acquisition unit 50 acquires a plurality of pieces of projection data from the storage unit 24 and outputs the plurality of pieces of projection data to the defect identification unit 52.

Next, in step S202, the defect identification unit 52 divides the pieces of projection data in all directions (all scans) into several sets (subsets).

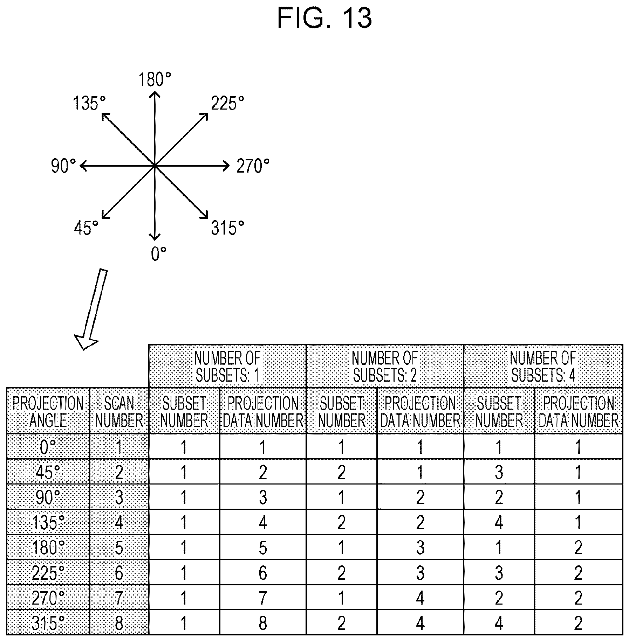

For example, when the number of pieces of projection data (the number of scans or the number of projection directions) is eight, subset numbers and projection data numbers can be set as in an example illustrated in Fig. 13. As in the example illustrated in Fig. 13, preferably, pieces of projection data with projection directions as close to opposite directions as possible are included in the same subset. Preferably, pieces of projection data with projection directions as close to orthogonal as possible are included in the same subset. It is also preferable to set subset numbers in the order of subsets with projection directions as close to orthogonal as possible (to update the defect ratio tomographic image (described in detail below)). In the example in Fig. 13, the projection directions of all the pieces of projection data fall within a single plane, and the projection directions (angles) of the pieces of projection data are set at 45-degree intervals. However, the projection directions of all the pieces of projection data do not necessarily fall within a single plane, and the projection angles of the pieces of projection data are not necessarily at equal intervals. In the example in Fig. 13, the projection directions of all the pieces of projection data fall within a single plane, and the projection angles of the respective pieces of projection data within the plane are set at equal intervals in order to clearly depict the above-described preferred method for division into subsets and for determination of the order. In the present exemplary embodiment, an implementation can be carried out for the inspection target 60 by setting the position and the attitude of the imaging system for each piece of projection data as appropriate. That is, when the coordinate system for the inspection target 60 is fixed, the yz planes or the xz planes of the respective pieces of projection data for the imaging system illustrated in Fig. 8C need not coincide. In the normal cone beam method, the yz planes or the xz planes of the respective pieces of projection data coincide.

In the defect identification process illustrated in Fig. 12, the defect identification unit 52 updates a defect ratio tomographic image using only pieces of projection data belonging to a subset, and repeats the update for each subset. At the point in time when the update is performed for all the subsets, the defect identification unit 52 increments the total update count by one. The defect identification unit 52 completes the generation of the defect ratio tomographic image at the point in time when the entire update is performed a predetermined number of times.

Thus, in step S204, the defect identification unit 52 generates an initial defect ratio tomographic image (described in detail below). Next, in step S206, the defect identification unit 52 sets a total update count i to "1".

Next, in step S208, the defect identification unit 52 initializes a subset number j to "1". The subset number j is initialized for each update count i. Next, in step S210, the defect identification unit 52 initializes a projection data number k to "1". The projection data number k is initialized for each subset j.

Next, in step S212, the defect identification unit 52 calculates the defect ratio of each voxel 74 in the defect ratio tomographic image, based on the projection data with a scan number corresponding to a combination of the subset number j and the projection data number k and the virtual projection data (described in detail below).

Next, in step S214, the defect identification unit 52 increments the projection data number k (k = k + 1). Next, in step S216, the defect identification unit 52 determines whether the projection data number k exceeds the total number Nk of pieces of projection data belonging to the subset j (k > Nk). The determination of step S216 remains negative until the projection data number k exceeds the total number Nk. Then, the process returns to step S212, and the calculation of the defect ratio of each voxel 74 in the defect ratio tomographic image is repeatedly performed. On the other hand, if the projection data number k exceeds the total number Nk, the determination of step S216 is positive, and then the process proceeds to step S218.

In step S218, the defect identification unit 52 updates the defect ratio tomographic image based on the defect ratio calculated in step S212 described above.

Next, in step S220, the defect identification unit 52 increments the subset number j (j = j + 1). Next, in step S222, the defect identification unit 52 determines whether the subset number j exceeds the total number Nj of subsets (j > Nj). The determination of step S222 remains negative until the subset number j exceeds the total number Nj. Then, the process returns to step S210, and the update of the defect ratio tomographic image is repeatedly performed. On the other hand, if the subset number j exceeds the total number Nj, the determination of step S222 is positive, and then the process proceeds to step S224.

In step S224, the defect identification unit 52 increments the update count i (i = i + 1). Next, in step S226, the defect identification unit 52 determines whether the update count i exceeds a predetermined number Ni (i > Ni). The determination of step S226 remains negative until the update count i exceeds the predetermined number Ni. Then, the process returns to step S208, and the update of the defect ratio tomographic image is repeatedly performed. On the other hand, if the update count i exceeds the predetermined number Ni, the determination of step S226 is positive, and then the process proceeds to step S228.

Next, in step S228, the defect identification unit 52 identifies the three-dimensional position, the size, and the shape of the defect 61 based on the defect ratio tomographic image generated through the process described above (described in detail below). Further, the defect identification unit 52 displays the identification result on the display 26. When the processing of step S228 is completed, the defect identification process illustrated in Fig. 12 ends.

The details of steps S204, S212, and S218 will be described hereinafter. The generation of a defect ratio tomographic image is performed for each of a defect with a small linear attenuation coefficient and a defect with a large linear attenuation coefficient. Specifically, the virtual projection data with a determined imaging position (virtual projection data that is generated from the attenuation information f(no_f, no_e) and the shape information no_f(no_pix) and does not include the defect 61) is compared with the actually measured projection data. Based on projection data larger in actual measurement, a defect ratio tomographic image of a defect 61 with a small linear attenuation coefficient is generated. Based on projection data smaller in actual measurement, a defect ratio tomographic image of a defect 61 with a large linear attenuation coefficient is generated. That is, the defect ratio tomographic image described above is generated for each of the defect 61 with a small linear attenuation coefficient and the defect 61 with a large linear attenuation coefficient. In the generation of a defect ratio tomographic image of the defect 61 with a small linear attenuation coefficient, for actually measured projection data smaller than the virtual projection data, the difference between the actually measured projection data and the virtual projection data is replaced with "0". Specifically, the value of the actually measured projection data is replaced with the value of the virtual projection data. In the generation of a defect ratio tomographic image of the defect 61 with a large linear attenuation coefficient, conversely, for actually measured projection data larger than the virtual projection data, the value of the actually measured projection data is replaced with the value of the virtual projection data. That is, the difference between the actually measured projection data and the virtual projection data is replaced with "0" (described in detail below). The method for generating a defect ratio tomographic image of the defect 61 with a small linear attenuation coefficient will be described in detail hereinafter, and the method for generating a defect ratio tomographic image of the defect 61 with a large linear attenuation coefficient will be additionally described, if necessary.

The details of step S204 will be described. In step S204, as described above, an initial defect ratio tomographic image r_d(no_pix) is generated. r_d(no_pix) represents the proportion of a defect included in the voxel no_pix and takes a value from 0.0 to 1.0. When r_d(no_pix) is 0.0, no defect is included in the voxel no_pix. When r_d(no_pix) is 1.0, the voxel no_pix is considered to be occupied by the defect 61. The total number of voxels 74 in the defect ratio tomographic image is represented as num_pix_t, and no_pix takes a value from 1 to num_pix_t. The linear attenuation coefficient of a defect at each energy no_e is given by a linear attenuation coefficient table f_d_l(no_e) of the defect 61 generated in advance. As the initial value of the defect ratio tomographic image r_d(no_pix), the values of all the voxels 74 are set to 0.0, resulting in a state where none of the voxels 74 includes the defect 61.

The details of step S212 will be described. The defect identification unit 52 calculates the defect ratio of the defect ratio tomographic image, based on pieces of projection data g(no_s, 1) to g(no_s, num_d). The scan number no_s is determined so as to correspond to the combination of the subset number j and the projection data number k (see Fig. 13). "num_d" represents the number of detectors 68.

A calculation method based on the projection data g(no_s, no_d) of the detector no_d will be described. First, virtual projection data g_v of the detector no_d in the scan no_s is determined using Formula (3) below, based on the current tomographic image.

$$g\_v = I(1) + I(2) + ... + I(num\_path(no\_s, no\_d)) ... (3)$$

In Formula (3) above, num_path(no_s, no_d) is the number of paths 70 incident on the detector no_d in the scan no_s, which is determined in advance.

In Formula (3) above, I(no_path) represents the intensity of radiation along the path no_path incident on a detector and is determined using Formula (4) below.

$$I(no\_path) = (e(1) \times I\_e(1)) + (e(2) \times I\_e(2)) + ... + (e(num\_e) \times I\_e(num\_e)) ... (4)$$

In Formula (4) above, as described above, e(1), e(2), ..., and e(num_e) indicate energies and are known.

The intensity I_e(no_e) of the radiation R at the energy e(no_e) in Formula (4) above is determined using Formula (5) below.

I_e(no_e) = I0_e(no_e) $\times$ exp(-{(f_ext(1, no_e) $\times$ plen_pix(no_s, no_d, no_path, 1)) + (f_ext(2, no_e) $\times$ plen_pix (no_s, no_d, no_path, 2)) + ... + (f_ext(num_pix(no_s, no_d, no_path), no_e) $\times$ plen_pix(no_s, no_d, no_path, num_-pix(no_s, no_d, no_path)))}), where f_ext(no_pix_path, no_e) = f(no_f(no_pix(no_s, no_d, no_path, no_pix_path)), no_e) + {r_d(no_pix(no_s, no_d, no_-path, no_pix_path)) $\times$ (f_d(no_e) - f(no_f(no_pix(no_s, no_d, no_path, no_pix_path)), no_e))},

in the generation of a defect ratio tomographic image of a defect with a small linear attenuation coefficient, f_d(no_e) = f_d_l(no_e), and

in the generation of a defect ratio tomographic image of a defect with a large linear

$$f\_d(no\_e) = f\_d\_h(no\_e) ... (5)$$

Formula (5) above represents the intensity I_e(no_e) of the radiation R with the intensity I0_e(no_e) at the energy e(no_e) emitted from the radiation source 64, passing through each voxel 74 while being attenuated, and incident on the detector 68.

In Formula (5) above, f_ext(no_pix_path, no_e) represents a linear attenuation coefficient at the energy no_e for the (no_pix_path)-th voxel no_pix through which the path no_path incident on the detector no_d in the scan no_s passes. A linear attenuation coefficient obtained by adding the linear attenuation coefficient f(no_f(no_pix(no_s, no_d, no_path, no_pix_path)), no_e) based on the original attenuation information f(no_f, no_e) and the shape information no_f(no_pix) at the ratio 1 - r_d(no_pix(no_s, no_d, no_path, no_pix_path)), and the linear attenuation coefficient f_d_1(no_e) of the defect at the ratio r_d(no_pix(no_s, no_d, no_path, no_pix_path)) is represented as f_ext.

As described above, the intensity I0_e(no_e) in Formula (5) above represents the total sum of the numbers of photons (at the energy e(no_e)) emitted per unit time over the minute angular ranges in Fig. 10A. As the interval of the angles of the paths 70 in Fig. 10A decreases, or in other words, as more paths 70 are set, I0_e(no_e) is set to a smaller value. I0_e(0), I0_e(1), ..., and I0_e(num_e) are determined by the radiation source 64 and are known.

The virtual projection data g_v determined using Formula (3) above is compared with the actually measured projection data g(no_s, no_d). When the virtual projection data g_v is larger, the defect ratios for all the voxels through which all the paths incident on the detector no_d in the scan no_s pass (except for air portions) are decreased by Δr to determine the virtual projection data g_v again, and the determined virtual projection data g_v is compared with the actually measured projection data g(no_s, no_d). The process of decreasing the defect ratio by Δr, recalculating the virtual projection data g_v, and comparing the virtual projection data g_v with the projection data g(no_s, no_d) in the way described above is repeatedly performed until the virtual projection data g_v becomes less than or equal to the actually measured projection data g(no_s, no_d). Then, among the virtual projection data g_v immediately before becoming less than or equal to the actually measured projection data g(no_s, no_d) and the virtual projection data g_v that becomes less than or equal to the actually measured projection data g(no_s, no_d), the virtual projection data g_v closer to the actually measured projection data g(no_s, no_d) is used. The amount by which the defect ratio is decreased to calculate the virtual projection data g_v is stored as dr_d(no_s, no_d). At this time, dr_d(no_s, no_d) is a negative value. To decrease the defect ratio by α and recalculate the virtual projection data g_v, in Formula (5) above, r_d(no_pix(no_s, no_d, no_path, no_pix_path)) of f_ext(no_pix_path, no_e) is replaced with r_d(no_pix(no_s, no_d, no_path, no_pix_path)) - α. After that, the intensity I_e(no_e) is recalculated using Formula (5) above, the intensity I(no_path) is recalculated from recalculated I_e(1), I_e(2), ..., I_e(num_e) using Formula (4) above, and the virtual projection data g_v is recalculated from recalculated I(1), I(2), ..., I(num_path(no_s, no_d)) using Formula (3) above.

During the calculation using Formula (5) above, if the voxels no_pix(no_s, no_d, no_path, 1) to no_pix(no_s, no_d, no_path, num_pix(no_s, no_d, no_path)) include a voxel 74 for which r_d(no_pix(no_s, no_d, no_path, no_pix_path)) - α is less than 0.0, the defect ratio r_d for that voxel 74 is set to 0.0. As described above, the linear attenuation coefficient f_ext is not set to a value greater than the original linear attenuation coefficient f(no_f(no_pix(no_s, no_d, no_path, no_pix_path)), no_e) for which the defect 61 is not included.

When the virtual projection data g_v is smaller than the actually measured projection data g(no_s, no_d), conversely, the defect ratios for all the voxels 74 through which all the paths 70 incident on the detector no_d in the scan no_s pass are increased by Δr to recalculate the virtual projection data g_v. This process is repeatedly performed until the virtual projection data g_v becomes greater than or equal to the actually measured projection data g(no_s, no_d). Then, among the virtual projection data g_v immediately before becoming greater than or equal to the actually measured projection data g(no_s, no_d) and the virtual projection data g_v that becomes greater than or equal to the actually measured projection data g(no_s, no_d), the virtual projection data g_v closer to the actually measured projection data g(no_s, no_d) is used. The amount by which the defect ratio is increased to calculate the virtual projection data g_v is stored as dr_d(no_s, no_d). At this time, dr_d(no_s, no_d) is a positive value. In a case where the defect ratio is to be increased, if a voxel 74 whose defect ratio exceeds the maximum value of 1.0 is present as a result of the increase, the defect ratio is set to 1.0 for that voxel 74.

Through the calculation described above, defect ratio increments dr_d(no_s, 1) to dr_d(no_s, num_d) can be determined based on the pieces of projection data g(no_s, 1) to g(no_s, num_d).

Among the pieces of actually measured projection data g(no_s, 1) to g(no_s, num_d), for data for which the actually measured projection data g is smaller than the virtual projection data g_v determined from the original attenuation information f(no_f, no_e) and the shape information no_f(no_pix) using Formulas (3) and (4) above and Formula (5) with the defect ratio r_d set to 0, that is, the virtual projection data g_v without a defect, the value of the actually measured projection data g is replaced with the value of the virtual projection data g_v in advance. For example, if the value of the actually measured projection data g(no_s, no_d) for the detector no_d is smaller than the virtual projection data g_v determined from the original attenuation information f(no_f, no_e) and the shape information no_f(no_pix) using Formulas (3), (4), and (5) above, it is considered that the voxels 74 through which the path 70 incident on the detector 68 passes do not include the defect 61 with a small linear attenuation coefficient. To set the defect ratio r_d (of a defect with a small linear attenuation coefficient) for each voxel 74 to 0.0, the value of the actually measured projection data g(no_s, no_d) is replaced with the value of the virtual projection data g_v in advance. As a result of the replacement, in the generation of a defect ratio tomographic image of the defect 61 with a small linear attenuation coefficient, the values of the pieces of actually measured projection data g(no_s, 1) to g(no_s, num_d) are always greater than or equal to the value of the virtual projection data without the defect 61, which is determined from the original attenuation information f(no_f, no_e) and the shape information no_f(no_pix). The replacement is performed before step S204 (see Fig. 12). Since the replacement is performed in the generation of a defect ratio tomographic image of each of the defect 61 with a small linear attenuation coefficient and the defect 61 with a large linear attenuation coefficient, the pieces of actually measured projection data g(no_s, 1) to g(no_s, num_d) before the replacement is performed are separately stored.

In the generation of a defect ratio tomographic image of a defect with a large linear attenuation coefficient, among the pieces of actually measured projection data g(no_s, 1) to g(no_s, num_d), for data for which the actually measured projection data g(no_s, no_d) is larger than the virtual projection data g_v determined from the original attenuation information f(no_f, no_e) and the shape information no_f(no_pix) using Formulas (3) and (4) above and Formula (5) with the defect ratio r_d set to 0, that is, the virtual projection data g_v without a defect, the value of the actually measured projection data g(no_s, no_d) is replaced with the value of the virtual projection data g_v in advance. For example, if the value of the actually measured projection data g(no_s, no_d) for the detector no_d is larger than the virtual projection data g_v determined from the original attenuation information f(no_f, no_e) and the shape information no_f(no_pix) using Formulas (3), (4), and (5) above, it is considered that the voxels 74 through which the path 70 incident on the detector 68 passes do not include the defect 61 with a large linear attenuation coefficient. To set the defect ratio r_d (of the defect 61 with a large linear attenuation coefficient) for each voxel 74 to 0.0, the value of the actually measured projection data g(no_s, no_d) is replaced with the value of the virtual projection data g_v in advance. As a result of the replacement, the values of the pieces of actually measured projection data g(no_s, 1) to g(no_s, num_d) are always less than or equal to the value of the virtual projection data without the defect 61, which is determined from the original attenuation information f(no_f, no_e) and the shape information no_f(no_pix).

In the generation of a defect ratio tomographic image of the defect 61 with a large linear attenuation coefficient, for the detector no_d in the scan no_s, first, the virtual projection data g_v is calculated using Formulas (3), (4), and (5) above based on the current tomographic image. If the virtual projection data g_v is smaller, the defect ratios for all the voxels 74 (except for air) through which all the paths 70 incident on the detector 68 pass are decreased by Δr to determine the virtual projection data g_v. This process is repeatedly performed until the virtual projection data g_v becomes greater than or equal to the actually measured projection data g(no_s, no_d). Among the virtual projection data g_v immediately before becoming greater than or equal to the actually measured projection data g(no_s, no_d) and the virtual projection data g_v that becomes greater than or equal to the actually measured projection data g(no_s, no_d), the virtual projection data g_v closer to the actually measured projection data g(no_s, no_d) is used. The amount by which the defect ratio is decreased during the calculation is stored as dr_d(no_s, no_d). At this time, dr_d(no_s, no_d) is a negative value. In this case, for a voxel 74 whose defect ratio becomes smaller than a minimum value of 0.0 as a result of the decrease, the defect ratio is set to 0.0. That is, in Formula (5) above, the linear attenuation coefficient f_ext is not set to a value smaller than the original linear attenuation coefficient f(no_f(no_pix(no_s, no_d, no_path, no_pix_path)), no_e) for which the defect 61 is not included. When the virtual projection data g_v is larger than the actually measured projection data g(no_s, no_d), conversely, the defect ratio is increased by Δr to determine the virtual projection data g_v. This process is repeatedly performed until the virtual projection data g_v becomes less than or equal to the actually measured projection data g(no_s, no_d). Among the virtual projection data g_v immediately before becoming less than or equal to the actually measured projection data g(no_s, no_d) and the virtual projection data g_v that becomes less than or equal to the actually measured projection data g(no_s, no_d), the virtual projection data g_v closer to the actually measured projection data g(no_s, no_d) is used. The amount by which the defect ratio is increased during the calculation is stored as dr_d(no_s, no_d). At this time, dr_d(no_s, no_d) is a positive value. In this case, for a voxel 74 whose defect ratio exceeds the maximum value of 1.0 as a result of the increase, the defect ratio is set to 1.0.

In both the generation of a defect ratio tomographic image of the defect 61 with a small linear attenuation coefficient and the generation of a defect ratio tomographic image of the defect 61 with a large linear attenuation coefficient, in the defect ratio tomographic image r_d generated in step S204, no defect can be generated for voxels 74 occupied by air among the voxels 1 to num_pix_t, and thus the defect ratios of the voxels 74 are fixed to 0.0. In addition, also in the determination of the defect ratio increments dr_d(no_s, 1) to dr_d(no_s, num_d) in step S212, the defect ratios of the voxels 74 occupied by air are fixed to 0.0.

The details of step S218 will be described. After the calculation of the defect ratio increments dr_d(no_s, 1) to dr_d(no_s, num_d) is completed for all the pieces of projection data belonging to the subset j, the defect identification unit 52 updates the defect ratio tomographic image based on the increments. The focus is placed on a certain voxel no_pix, and it is assumed that a path 70 incident on the detector no_d in the scan no_s passes through this voxel 74. At this time, dr_d(no_s, no_d) is an estimated value of a defect ratio increment for the path 70 incident on the detector no_d in the scan no_s and passing through the voxel no_pix. Accordingly, it is necessary to determine the mean value by weighting the estimated values of the defect ratio increments in all the paths 70 passing through the voxel no_pix by respective path lengths. First, dr_d_ave(no_pix) is initialized to have a value of "0" for all the voxels 74, where dr_d_ave(no_pix) denotes a defect ratio tomographic image having the mean value of the increments. Here, dr_d_ave(no_pix) represents the mean value of the defect ratio increment in the voxel no_pix, and no_pix is any value from 1 to the total number of voxels, namely, num_pix_t. For all the pieces of projection data belonging to the subset j, the defect ratio increments dr_d(no_s, 1) to dr_d(no_s, num_d) are weighted by the path lengths and added to the voxels 74 in dr_d_ave. Finally, the values of the voxels 74 in dr_d_ave are divided by the total sum plen_pix_sub of the path lengths of the voxels 74 for which the table has been generated in advance to determine the mean value of the increments for the voxels 74, and the mean value is added to the defect ratio tomographic image before the update to update the defect ratio tomographic image.

The content of the addition process will be described in detail using, as an example, the pieces of projection data in the scan no_s belonging to the subset j. The number of voxels through which the path no_path incident on the detector no_d in the scan no_s passes is num_pix(no_s, no_d, no_path). In the tomographic image dr_d_ave with the mean value of the increments, the value given by increment × path length, that is, dr_d(no_s, no_d) × plen_pix(no_s, no_d, no_path, no_pix_path), is added to the value of the (no_pix_path)-th voxel no_pix(no_s, no_d, no_path, no_pix_path) through which the path no_path incident on the detector no_d in the scan no_s passes. In a similar way, in the tomographic image dr_d_ave with the mean value of the increments, the values given by increment dr_d(no_s, no_d) × path lengths (plen_pix(no_s, no_d, no_path, 1) to plen_pix(no_s, no_d, no_path, num_pix(no_s, no_d, no_path))) are each added to the values of all the num_pix(no_s, no_d, no_path) voxels 74 through which the path no_path passes. When the voxels no_pix(no_s, no_d, no_path, 1) to no_pix(no_s, no_d, no_path, num_pix(no_s, no_d, no_path)) include a voxel whose defect ratio exceeds the maximum value of 1.0 as a result of adding the increment dr_d(no_s, no_d) to the defect ratios before the update, the increment is corrected for that voxel so that the result of the addition becomes the maximum value of 1.0, and then the corrected increment is added to dr_d_ave. Similarly, when a voxel whose defect ratio becomes smaller than the minimum value of 0.0 as a result of adding the increment dr_d(no_s, no_d) to the defect ratios before the update is included, the increment is corrected for that voxel 74 so that the result of the addition becomes 0.0, and then the corrected increment is added to dr_d_ave. The addition process described above is performed for all the paths 1 to num_path(no_s, no_d) incident on the detector no_d in the scan no_s. Then, the addition process described above is performed for all the detectors 1 to num_d in the scan no_s. The addition process for the pieces of projection data in the scan no_s belonging to the subset j has been described above. This addition process is performed for all the pieces of projection data belonging to the subset j. Finally, dr_d_ave(1) to dr_d_ave(num_pix_t) generated through the addition process described above are divided by the total sums plen_pix_sub(j, 1) to plen_pix_sub(j, num_pix_t) of the path lengths of the respective voxels 74 to determine tomographic images dr_d_ave(1) to dr_d_ave(num_pix_t) with the mean values of the defect ratio increments, and the tomographic images dr_d_ave(1) to dr_d_ave(num_pix_t) are added to the tomographic images r_d(1) to r_d(num_pix_t) before the update to update the defect ratio tomographic images.

As described above, the value of the defect ratio is fixed to 0.0 for voxels 74 occupied by air in the defect ratio tomographic images r_d(1) to r_d(num_pix_t).

The details of step S228 will be described. The defect identification unit 52 identifies the three-dimensional position, the size, and the shape of the defect 61, based on the defect ratio tomographic image r_d. The inside defect 61 included in the inspection target 60 is very sparse. Thus, the difference between virtual projection data virtually generated by simulation based on the attenuation information and the shape information of the inspection target 60 not including the defect 61 and actually measured projection data is close to 0 for most of the detectors no_d in the scan no_s. In the three-dimensional defect ratio image, through the iterative processing illustrated in Fig. 12, a defect ratio image having a size and a shape that match the difference between the simulation and the actual measurement for each detector 68 in a region where the paths 70 corresponding to a small number of pieces of projection data for the detector no_d in the scan no_s for which the differences are not zero intersect is generated. A region having a defect ratio greater than or equal to a predetermined value (e.g., 0.8) in the three-dimensional defect ratio image is identified as the defect 61. Alternatively, after regions having defect ratios greater than or equal to a specified value (e.g., 0.8) are extracted from the three-dimensional defect ratio image, connected regions may be determined, and, among the connected regions, a region in which the total sum of the defect ratios in the respective connected regions is greater than or equal to a predetermined value, or in other words, a region having a large defect ratio value and volume, may be identified as the defect 61. Alternatively, after a three-dimensional smoothing filter is applied to the three-dimensional defect ratio image and regions having defect ratios greater than or equal to a predetermined value (e.g., 0.6) are extracted, connected regions may be determined, and, among the connected regions, a region in which the maximum defect ratio value is greater than or equal to a specified value may be identified as a defect. Applying a smoothing filter increases the value of the defect ratio for a region having a large defect ratio value and volume. After identifying a defect, the defect identification unit 52 displays the identified defect 61 on the display 26 so that the three-dimensional position, the size, and the shape of the identified defect 61 can be identified inside the inspection target 60.

As described above, according to the present exemplary embodiment, the three-dimensional position, the size, and the shape of the defect 61 can be accurately identified. Second Exemplary Embodiment

The present exemplary embodiment describes a defect identification process different from that in the first exemplary embodiment. Also in the present exemplary embodiment, as in the first exemplary embodiment, the table num_path(no_s, no_d) of the number of paths 70, the table num_pix(no_s, no_d, no_path) of the number of voxels 74, the table no_pix(no_s, no_d, no_path, no_pix_path) of the numbers of the voxels 74, and the table plen_pix(no_s, no_d, no_path, no_pix_path) of the path lengths are generated in advance. The tables f_d_l(no_e) and f_d_h(no_e) of linear attenuation coefficients of defects are also generated in advance. The table plen_pix_sub(no_sub, no_pix) of the total sum of path lengths belonging to the subset no_sub is not necessary.

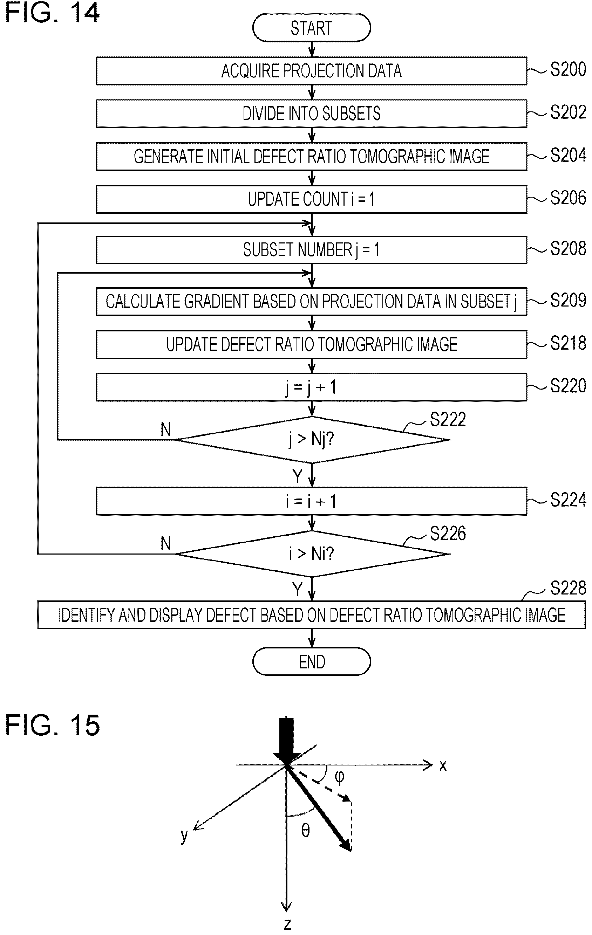

Fig. 14 is a flowchart illustrating an example of the defect identification process executed by the information processing apparatus 10 according to the present exemplary embodiment. As illustrated in Fig. 14, the defect identification process according to the present exemplary embodiment is different from the defect identification process according to the first exemplary embodiment (see Fig. 12) in that the processing of step S209 is included instead of steps S210 to S216. The specific content of the processing of step S218 after step S209 differs from that in the first exemplary embodiment.

Also in the present exemplary embodiment, the generation of a defect ratio tomographic image is performed for each of the defect 61 with a small linear attenuation coefficient and the defect 61 with a large linear attenuation coefficient. In this case, in the generation of a defect ratio tomographic image of the defect 61 with a small linear attenuation coefficient, among the pieces of actually measured projection data g(no_s, 1) to g(no_s, num_d), for data for which the actually measured projection data g(no_s, no_d) is smaller than the virtual projection data g_v determined from the original attenuation information f(no_f, no_e) and the shape information no_f(no_pix) using Formulas (3) and (4) above and Formula (5) with the defect ratio r_d set to 0, that is, the virtual projection data g_v without a defect, the value of the actually measured projection data g(no_s, no_d) is replaced with the value of the virtual projection data g_v in advance. In the generation of a defect ratio tomographic image of the defect 61 with a large linear attenuation coefficient, conversely, for data for which the actually measured projection data g(no_s, no_d) is larger than the virtual projection data g_v, the value of the actually measured projection data g(no_s, no_d) is replaced with the value of the virtual projection data g_v in advance.

In the present exemplary embodiment, an evaluation function is defined to evaluate the difference between the virtual projection data g_v determined from the generated defect ratio tomographic image r_d and the actually measured projection data g(no_s, no_d). Then, the defect ratio tomographic image is updated so that the evaluation function is decreased. Specifically, for each of the voxels 1 to num_pix_t in the defect ratio tomographic image r_d, the change in evaluation function in response to a slight change in the value (defect ratio) of the defect ratio tomographic image is determined, and this value is set as a gradient. Then, the defect ratio tomographic image is updated based on the gradient determined for each of the voxels 1 to num_pix_t. The gradient is determined for each subset j, and the defect ratio tomographic image is updated. Steps S209 and S218 will be described in detail hereinafter.

In step S209, the defect identification unit 52 calculates the gradient based on the pieces of projection data belonging to the subset j. First, an evaluation function ef is defined in advance as follows.

$$\mathrm{ef} = \Sigma\Sigma(\mathrm{g\_v}(\mathrm{no\_s}, \mathrm{no\_d}) - \mathrm{g}(\mathrm{no\_s}, \mathrm{no\_d}))^2,$$

where

> the first $\Sigma$ is the total sum for the scan no_s belonging to the subset j,
> the second $\Sigma$ is the total sum (total sum of 1 to num_d) for the detector no_d,
> g_v(no_s, no_d) represents virtual projection data for the detector no_d in the scan no_s, and is determined from the defect ratio tomographic image, and
> g(no_s, no_d) represents the actually measured projection data for the detector no_d in the scan no_s. ... (6)

First, the respective pieces of virtual projection data g_v(no_s, no_d) are determined from the current defect ratio tomographic image r_d using Formulas (3), (4), and (5) above. Then, the evaluation function ef is determined using Formula (6) above. Next, r_d(1), that is, the value (defect ratio) of the voxel 1 in the defect ratio tomographic image r_d, is hypothetically increased by a predetermined amount $\alpha$, the respective pieces of virtual projection data g_v(no_s, no_d) are determined again using Formulas (3), (4), and (5) above, and the evaluation function ef is determined again using Formula (6) above. If r_d(1) is increased by $\alpha$, when the voxel no_pix(no_s, no_d, no_path, no_pix_path) is equal to 1 in Formula (5) above, the intensity I_e(no_e) is calculated by replacing r_d(no_pix(no_s, no_d, no_path, no_pix_path)) of f_ext(no_pix_path, no_e) with r_d(no_pix(no_s, no_d, no_path, no_pix_path)) + $\alpha$. In this way, the evaluation function ef before the increase in the value of the voxel 1 in the defect ratio tomographic image r_d by $\alpha$ is subtracted from the evaluation function ef after the increase to determine a gradient $\Delta$ef(1) for the voxel 1.

In the calculation of the gradient, it is desirable that the gradient be computable even when r_d(1) + $\alpha$ exceeds the maximum value of 1.0 of the defect ratio. Accordingly, when r_d(1) + $\alpha$ exceeds the maximum value of 1.0 of the defect ratio, r_d(1) of f_ext is replaced with 1.0 - $\alpha$ and 1.0 to calculate the intensities I_e(no_e) when the voxel no_pix is equal to 1 in Formula (5) above to calculate the evaluation function ef. Then, the evaluation function ef calculated using 1.0 - $\alpha$ in place

of r_d(1) is subtracted from the evaluation function ef calculated using 1.0 in place of r_d(1) to determine the gradient Δef(1) for the voxel 1.

In a similar way, the gradients Δef(2), Δef(3), ..., and Δef(num_pix_t) for the voxels 2, 3, ..., and num_pix_t are determined. To quickly determine the evaluation function ef after the increase by $\alpha$, if none of the voxels no_pix(no_s, no_d, no_path, 1) to no_pix(no_s, no_d, no_path, num_pix(no_s, no_d, no_path)) through which the path no_path incident on the detector no_d in the scan no_s passes matches the voxel obtained as a result of the increase by $\alpha$ during the calculation of Formula (5) above, the calculation of Formulas (4) and (5) above may be omitted for that path 70, and the intensity I(no_path) of the radiation R along the path no_path may be set to the same value as the intensity I(no_path) before the increase by $\alpha$. For voxels occupied by air, the defect ratios are fixed to 0.0, and accordingly the gradient Δef is set to 0. In this case, the calculations of Formulas (3), (4), and (5) above are not performed.

The evaluation function ef may be any function that can evaluate the difference between the virtual projection data g_v determined from the defect ratio tomographic image r_d and the actually measured projection data g(no_s, no_d). For example, the following function may be used.

$$ef = \Sigma\Sigma \ abs(g\_v(no\_s, no\_d) - g(no\_s, no\_d)),$$

where

the first $\Sigma$ is the total sum for the scan no_s belonging to the subset j,
the second $\Sigma$ is the total sum (total sum of 1 to num_d) for the detector no_d,
abs(x) represents the absolute value of x,
g_v(no_s, no_d) represents virtual projection data for the detector no_d in the scan no_s, and is determined from the defect ratio tomographic image, and
g(no_s, no_d) represents the actually measured projection data for the detector no_d in the scan no_s. ... (7)

The processing of step S218 will be described. The defect identification unit 52 updates the defect ratio tomographic image r_d using the following formulas.

$$r\_d(1) \leftarrow r\_d(1) - \beta \times \Delta ef(1)$$

$$r\_d(2) \leftarrow r\_d(2) - \beta \times \Delta ef(2)$$

......

$$r\_d(num\_pix\_t) \leftarrow r\_d(num\_pix\_t) - \beta \times \Delta ef(num\_pix\_t),$$

where $\beta$ represents the step size of the update.... (8)

For a voxel 74 whose value of the defect ratio r_d becomes smaller than the minimum value of 0.0 of the defect ratios as a result of the update, the value of the defect ratio r_d is set to 0.0. For a voxel 74 whose value of the defect ratio r_d exceeds the maximum value of 1.0 of the defect ratios as a result of the update, the value of the defect ratio r_d is set to the maximum value of 1.0.

Through the process described above, also in the present exemplary embodiment, a defect ratio tomographic image r_d can be generated for each of the defect 61 with a small attenuation coefficient and the defect 61 with a large linear attenuation coefficient.

The technique disclosed herein is not limited to the embodiments described above, and various modifications can be made. For example, the following modifications are possible.

In the exemplary embodiments described above, the scan method is the cone beam method, as an example. Alternatively, the scan method is not limited to any specific one, and any scan method can be used. For example, in the pencil beam (parallel beam) method, two-dimensional data obtained by a series of parallel scans of the radiation source 64 and the detector 68 in the x direction and the y direction is set as one piece of projection data. Then, after data at different projection angles is set as another piece of projection data, the imaging position identification process and the defect identification process can be performed in a way similar to that for the cone beam method. Fig. 8C is a diagram of an imaging system based on the cone beam method. In the pencil beam (parallel beam) method, since a radiation source 64 is present so as to correspond to each detector 68, radiation sources 64 are present in the xy plane in Fig. 8C at the same x and y coordinates as those of the respective detectors 68. Of course, also in the pencil beam method, any position and attitude of the imaging system for each piece of projection data may be used with respect to the inspection target 60. When the coordinate system for the inspection target 60 is fixed, the yz planes or the xz planes of the respective pieces of projection data for the imaging system illustrated in Fig. 8C need not coincide. Also in the pencil beam method, the imaging position identification process involves identifying an imaging position using the method illustrated in Fig. 7 so that the similarity between the actually measured projection data and the virtual projection data is greater than the threshold value.

In the defect identification process, pieces of projection data are divided into subsets, the defect identification process illustrated in Fig. 12 or 14 is performed to generate a defect ratio tomographic image, and the three-dimensional position, the shape, and the size of the defect 61 can be identified based on the generated defect ratio tomographic image. In the pencil beam (parallel beam) method, since one detector 68 corresponds to a radiation source 64, only a path 70 incident on one detector 68 is set using the method illustrated in Fig. 10A.

In the fan beam method, one-dimensional data detected by a one-dimensionally arranged detector 68 is connected in the x direction or the y direction to create two-dimensional data as one piece of projection data, and data at different projection angles is set as another piece of projection data. Thereafter, the imaging position identification process and the defect identification process can be performed in a way similar to that for the cone beam method. In the fan beam method, since a radiation source 64 is present so as to correspond to each (one-dimensional) detector 68, radiation sources 64 are present in the xy plane in Fig. 8C along the x axis or the y axis, at the same x coordinates or y coordinates as those of the respective detectors 68. Also in the fan beam method, any position and attitude of the imaging system for each piece of projection data may be used with respect to the inspection target 60. Also in the fan beam method, an imaging position is identified through the above-described imaging position identification process illustrated in Fig. 7. In addition, the defect identification process illustrated in Fig. 12 or 14 is performed to generate a defect ratio tomographic image, and the three-dimensional position, the shape, and the size of the defect 61 can be identified based on the generated defect ratio tomographic image. In the fan beam method, since a one-dimensionally arranged detector 68 corresponds to a radiation source 64, only a path 70 incident on a one-dimensionally arranged detector 68 is set using the method illustrated in Fig. 10A.

In the exemplary embodiments described above, the paths 70 of the radiation R are set at equal intervals. Alternatively, the intervals may be changed for the respective paths 70 to express a difference in the intensity of the radiation R for the respective paths 70. For example, to set the intensity of the emitted radiation R higher toward the center and lower toward the edges of the radiation source 64, the paths 70 are set at narrower intervals (denser) toward the center and wider intervals (coarser) toward the edges of the radiation source 64. Alternatively, the intensity $I0\_e(no\_e)$ to be emitted from the radiation source 64 may be changed for each path 70. In this case, a table $I0\_e(no\_s, no\_d, no\_path, no\_e)$ of intensities for the path no_path incident on the detector no_d in the scan no_s is generated in advance, and the intensity $I0\_e(no\_e)$ of the radiation R to be emitted from the radiation source 64 at the energy $e(no\_e)$ in Formula (2) or (5) above is set to $I0\_e(no\_s, no\_d, no\_path, no\_e)$ and changed according to the path 70.

Each of the exemplary embodiments described above can also be implemented when the information on the linear attenuation coefficient of the inspection target 60 is represented not by values for two or more energy bands but by a single value. When the information on the linear attenuation coefficient is represented by a single value, the linear attenuation coefficient table $f(no\_f, no\_e)$ illustrated in Fig. 9 represents a single value $f(no\_f)$ for each member number no_f. Further, Formula (2) above is replaced by Formula (2_2) below.

$$I = I0 \times \exp(-\{(f(no\_f(no\_pix(1))) \times plen\_pix(1)) + (f(no\_f(no\_pix(2))) \times plen\_pix(2)) + ... + (f(no\_f(no\_pix(num\_pix))) \times plen\_pix(num\_pix)\}) \quad ... \quad (2\_2) \tag{2_2}$$

Then, Formula (1) above is omitted, and the intensities I determined using Formula (2_2) above for the respective paths 70 can be integrated for each detector 68 to generate virtual projection data.

The linear attenuation coefficients $f\_d\_l(no\_e)$ and $f\_d\_h(no\_e)$ of defects are also replaced with single values $f\_d\_l$ and $f\_d\_h$. Further, Formula (5) above is replaced by Formula (5_2) below.

$$I = I0 \times \exp(-\{(f\_ext(1) \times plen\_pix(no\_s, no\_d, no\_path, 1)) + (f\_ext(2) \times plen\_pix(no\_s, no\_d, no\_path, 2)) + ... + (f\_ext(num\_pix(no\_s, no\_d, no\_path)) \times plen\_pix(no\_s, no\_d, no\_path, num\_pix(no\_s, no\_d, no\_path)))\}),$$

where

$$f\_ext(no\_pix\_path) = f(no\_f(no\_pix(no\_s, no\_d, no\_path, no\_pix\_path))) + \{r\_d(no\_pix(no\_s, no\_d, no\_path, no\_pix\_path)) \times (f\_d - f(no\_f(no\_pix(no\_s, no\_d, no\_path, no\_pix\_path))))\},$$

in the generation of a defect ratio tomographic image of a defect with a small linear attenuation coefficient, $f\_d = f\_d\_1$, and

in the generation of a defect ratio tomographic image of a defect with a large linear attenuation coefficient,

$$f\_d = f\_d\_h \ldots (5\_2)$$

...

Then, Formula (4) above is omitted, and the intensities I determined using Formula (5_2) above for the respective paths 70 can be set as I(1), I(2), etc. to determine the virtual projection data g_v from Formula (3) above.

In the exemplary embodiments described above, the paths 70 incident on each detector 68 can be approximately combined into one path. In this case, a table similar to that in the defect identification process needs to be generated in advance also in the imaging position identification process. In a case where the paths 70 are combined into one path, the tables to be generated in advance are as follows. In the imaging position identification process, the following tables are regenerated each time the imaging position is updated.

· Table num_path(no_s, no_d): represents the number of paths 70 incident on the detector no_d in the scan no_s. Even in a case where the paths 70 are combined into one path, a table for the number of paths 70 before combining is necessary in the first exemplary embodiment.
· Table num_pix(no_s, no_d): represents the number of voxels 74 through which at least one path 70 passes among the paths 1 to num_path(no_s, no_d) incident on the detector no_d in the scan no_s before combining the paths 70 into one path. In a case where the paths 70 are not combined into one path, the table num_pix(no_s, no_d, no_path) is generated, but in a case where the paths 70 are combined into one path, no_path can be omitted.
· Table no_pix(no_s, no_d, no_pix_path): represents the number of the (no_pix_path)-th voxel 74 through which at least one path 70 passes among the paths 1 to num_path(no_s, no_d) incident on the detector no_d in the scan no_s before combining the paths 70 into one path. In a case where the paths 70 are not combined into one path, the table no_pix(no_s, no_d, no_path, no_pix_path) is generated, but in a case where the paths 70 are combined into one path, no_path can be omitted.
· Table plen_pix(no_s, no_d, no_pix_path): represents the path length of one path into which the paths passing through the (no_pix_path)-th voxel 74 through which at least one path 70 passes among the paths 1 to num_path(no_s, no_d) incident on the detector no_d in the scan no_s before combining the paths 70 into one path are combined, that is, the mean value of the path lengths. plen_pix(no_s, no_d, no_pix_path) is determined by extracting all the voxels 74 through which at least one path 70 passes among the paths 1 to num_path(no_s, no_d) before combining the paths 70 into one path, calculating the total sum of the path lengths of the paths 1 to num_path(no_s, no_d) passing through each voxel 74, and dividing the total sum by num_path(no_s, no_d). The number no_pix_path of the voxel 74 is common in the tables no_pix(no_s, no_d, no_pix_path) and plen_pix(no_s, no_d, no_pix_path). In a case where the paths 70 are not combined into one path, the table plen_pix(no_s, no_d, no_path, no_pix_path) is generated, but in a case where the paths 70 are combined into one path, no_path can be omitted.
· Table I0_e(no_s, no_d, no_e): represents the total sum of intensities at the energy e(no_e) of the radiation R for all the paths 70 incident on the detector no_d in the scan no_s before combining the paths 70 into one path. In a case where the paths incident on each detector are combined into one path, the number of paths 70 incident on each detector 68 before combining differs between detectors 68. That is, in Formulas (2) and (5) above, the intensity I0_e(no_e) at the energy e(no_e) emitted from the radiation source 64 differs for each detector 68. Thus, the table I0_e(no_s, no_d, no_e) is generated in advance instead of the intensity I0_e(no_e). I0_e(no_s, no_d, no_e) does not depend on the imaging position, and is thus generated only once in advance.
· Table plen_pix_sub(no_sub, no_pix): represents the total sum of path lengths through the voxel no_pix for all the paths 70 incident on all the detectors 68 in all the scans belonging to a subset no_sub. Even in a case where the paths 70 are combined into one path, a table for the total sum of the path lengths before combining is necessary in the first exemplary embodiment.

In a case where the paths 70 incident on each detector 68 are approximately combined into one path, Formula (2) above is replaced by Formula (2_3) below.

I_e(no_e) = I0_e(no_s, no_d, no_e) × exp(-{(f(no_f(no_pix(no_s, no_d, 1)), no_e) × plen_pix(no_s, no_d, 1)) + (f(no_f(no_pix(no_s, no_d, 2)), no_e) × plen_pix(no_s, no_d, 2)) + ... + (f(no_f(no_pix(no_s, no_d,    (2_3) num_pix(no_s, no_d))), no_e) × plen_pix(no_s, no_d, num_pix(no_s, no_d)))}) ... (2_3)

Then, the intensity I incident on the detector no_d can be determined using Formula (1) above to generate virtual projection data.

Further, Formula (5) above is replaced by Formula (5_3) below.

I_e(no_e) = I0_e(no_s, no_d, no_e) × exp(-{(f_ext(1, no_e) × plen_pix(no_s, no_d, 1)) + (f_ext(2, no_e) × plen_pix(no_s, no_d, 2)) + ... + (f_ext(num_pix(no_s, no_d), no_e) × plen_pix(no_s, no_d, num_pix(no_s, no_d)))}), where f_ext(no_pix_path, no_e) = f(no_f(no_pix(no_s, no_d, no_pix_path)), no_e) + {r_d(no_pix(no_s, no_d, no_pix_path)) × (f_d(no_e) - f(no_f(no_pix(no_s, no_d, no_pix_path)), no_e))},

in the generation of a defect ratio tomographic image of a defect with a small linear attenuation coefficient, f_d(no_e) = f_d_l(no_e), and
in the generation of a defect ratio tomographic image of a defect with a large linear attenuation coefficient, f_d(no_e) = f_d_h(no_e) ... (5_3)

Then, the virtual projection data g_v can be determined using Formula (4_3) below instead of Formula (4) above. In this case, Formula (3) above is not necessary.

$$g\_v = (e(1) \times I\_e(1)) + (e(2) \times I\_e(2)) + ... + (e(num\_e) \times I\_e(num\_e)) ... (4\_3)$$

In step S218 of the defect identification process according to the first exemplary embodiment illustrated in Fig. 12, the formula representing the increment weighted by the path length when the estimated value dr_d(no_s, no_d) of the defect ratio increment for the path 70 incident on the detector no_d in the scan no_s is weighted by the path length and added to the (no_pix_path)-th voxel no_pix(no_s, no_d, no_pix_path) in the tomographic image dr_d_ave with the mean value of the increments is given by dr_d(no_s, no_d) × plen_pix(no_s, no_d, no_pix_path) × num_path(no_s, no_d).

In a case where the paths 70 incident on each detector 68 are approximately combined into one path and in a case where the information on the linear attenuation coefficient of the inspection target 60 is represented not by values for two or more energy bands but by a single value, the intensity I incident on the detector no_d can be determined using Formula (2_4) below instead of Formula (2) above to generate virtual projection data. In this case, Formula (1) above is no longer necessary.

I = I0(no_s, no_d) × exp(-{(f(no_f(no_pix(no_s, no_d, 1))) × plen_pix(no_s, no_d, 1)) + (f(no_f(no_pix(no_s, no_d, 2))) × plen_pix(no_s, no_d, 2)) + ... + (f(no_f(no_pix(no_s, no_d, num_pix(no_s, no_d)))) × plen_pix(no_s, no_d, num_pix(no_s, no_d)))}) ... (2_4)    (2_4)

Further, the virtual projection data g_v can be determined using Formula (5_4) below instead of Formula (5) above. In this case, Formulas (3) and (4) above are no longer necessary.

g_v = I0_e(no_s, no_d) × exp(-{(f_ext(1) × plen_pix(no_s, no_d, 1)) + (f_ext(2) × plen_pix(no_s, no_d, 2)) + ... + (f_ext(num_pix(no_s, no_d)) × plen_pix(no_s, no_d, num_pix(no_s, no_d)))}), where f_ext(no_pix_path) = f(no_f(no_pix(no_s, no_d, no_pix_path))) + {r_d(no_pix(no_s, no_d, no_pix_path)) × (f_d - f(no_f(no_pix(no_s, no_d, no_pix_path))))},

in the generation of a defect ratio tomographic image of a defect with a small linear attenuation coefficient, f_d = f_d_1, and
in the generation of a defect ratio tomographic image of a defect with a large linear attenuation coefficient,

$$f\_d = f\_d\_h ... (5\_4)$$

In the exemplary embodiments described above, furthermore, the detection efficiencies of the detector 68 at the respective energies are represented as de(1), de(2), ..., and de(num_e), and Formulas (1) and (4) above may be replaced by Formulas (1_5) and (4_5) below, respectively, to reflect the detection efficiencies of the detector 68 in the intensity I of the radiation R.

$$I = (e(1) \times I\_e(1) \times de(1)) + (e(2) \times I\_e(2) \times de(2)) + ... + (e(num\_e) \times I\_e(num\_e) \times de(num\_e)) ... (1\_5) \qquad (1\_5)$$

$$I(no\_path) = (e(1) \times I\_e(1) \times de(1)) + (e(2) \times I\_e(2) \times de(2)) + ... + (e(num\_e) \times I\_e(num\_e) \times de(num\_e)) ... (4\_5) \qquad (4\_5)$$

In the defect identification process according to the first exemplary embodiment described above (see Fig. 12), a plurality of types may be set for at least one of the defect 61 with a small linear attenuation coefficient or the defect 61 with a large linear attenuation coefficient. For example, in addition to air, foreign substance having a small linear attenuation coefficient may also be set as the defect 61 with a small linear attenuation coefficient. A plurality of different types of foreign substances having large linear attenuation coefficients may be set as defects 61 with large linear attenuation coefficients. When a plurality of types of defects 61 are set, f_d_1(no_f_d_1, no_e) and f_d_h(no_f_d_h, no_e) are defined in advance as linear attenuation coefficients of the defects 61 instead of f_d_l(no_e) and f_d_h(no_e). Here, no_f_d_1 and no_f_d_h represent the number of the defect 61 with a small linear attenuation coefficient and the number of the defect 61 with a large linear attenuation coefficient, respectively. Moreover, f_d_1(no_f_d_1, no_e) and f_d_h(no_f_d_h, no_e) represent linear attenuation coefficients of a defect no_f_d_l with a small linear attenuation coefficient and a defect no_f_d_h with a large linear attenuation coefficient, respectively, at the energy no_e of the radiation. For all types of defects 61 with small linear attenuation coefficients, the linear attenuation coefficients f_d_l are assumed to be smaller than the linear attenuation coefficients f of all the members included in the inspection target 60, except for air, at all the energies no_e. For all types of defects 61 with large linear attenuation coefficients, the linear attenuation coefficients f_d_h are assumed to be larger than the linear attenuation coefficients f of all the members included in the inspection target, except for air, at all the energies no_e. Further, the value of the linear attenuation coefficient f_d_l for the defect with the number no_f_d_l is assumed to be smaller than that for the defect with the number no_f_d_l - 1 at all the energies no_e, and the value of the linear attenuation coefficient f_d_h for the defect with the number no_f_d_h is assumed to be larger than that for the defect with the number no_f_d_h - 1 at all the energies no_e.

The following describes the defect identification process (see Fig. 12) for setting a plurality of types of defects 61 for the defect 61 with a small linear attenuation coefficient. The description of a process similar to that for setting one type of defect 61 will be omitted. Further, the description of the defect 61 with a large linear attenuation coefficient will be omitted.

First, in step S204, the defect identification unit 52 also generates a defect type tomographic image no_f_d(no_pix) together with the defect ratio tomographic image r_d(no_pix). Here, the number of defect types is represented as num_f_d. The defect with the number num_f_d is a defect with the minimum linear attenuation coefficient. Then, as the initial values of no_f_d(no_pix), the values of all the voxels are set to 1, which indicates a defect having the maximum linear attenuation coefficient. As the initial value of r_d(no_pix), the values of all the voxels are set to 0.0, which indicates no defect included.

Further, in step S212, Formula (5) above is replaced by Formula (5_5) below.

$$I\_e(no\_e) = I0\_e(no\_e) \times exp(-\{(f\_ext(1, no\_e) \times plen\_pix(no\_s, no\_d, no\_path, 1)) + (f\_ext(2, no\_e) \times plen\_pix(no\_s, no\_d, no\_path, 2)) + ... + (f\_ext(num\_pix(no\_s, no\_d, no\_path), no\_e) \times plen\_pix(no\_s, no\_d, no\_path, num\_pix(no\_s, no\_d, no\_path)))\}),$$

where

when the defect number no_f_d(no_pix(no_s, no_d, no_path, no_pix_path)) is 1, f_ext(no_pix_path, no_e) = f(no_f(no_pix(no_s, no_d, no_path, no_pix_path)), no_e) + {r_d(no_pix(no_s, no_d, no_path, no_pix_path)) × (f_d(l, no_e) - f(no_f(no_pix(no_s, no_d, no_path, no_pix_path)), no_e))},

when the defect number no_f_d(no_pix(no_s, no_d, no_path, no_pix_path)) is greater than or equal to 2, f_ext(no_pix_path, no_e) = f_d(no_f_d(no_pix(no_s, no_d, no_path, no_pix_path))-1, no_e) + {r_d(no_pix(no_s, no_d, no_path, no_pix_path)) × (f_d(no_f_d(no_pix(no_s, no_d, no_path, no_pix_path)), no_e) - f_d(no_f_d(no_pix(no_s, no_d, no_path, no_pix_path))-1, no_e))},

in the generation of a defect ratio tomographic image of a defect with a small linear attenuation coefficient, f_d(no_f_d, no_e) = f_d_l(no_f_d, no_e), and
in the generation of a defect ratio tomographic image of a defect with a large linear attenuation coefficient,

$$f\_d(no\_f\_d, no\_e) = f\_d\_h(no\_f\_d, no\_e) \ ... \ (5\_5)$$

Formula (5_5) above means that when the linear attenuation coefficient at the energy no_e for the (no_pix_path)-th voxel no_pix through which the path no_path incident on the detector no_d in the scan no_s passes is represented as f_ext and the defect number no_f_d of that voxel is 1, a linear attenuation coefficient obtained by adding the linear attenuation coefficient f(no_f(no_pix), no_e) based on the original attenuation information f and the shape information no_f at the ratio 1 - r_d and the linear attenuation coefficient f_d_l(l, no_e) of the defect with the number 1 at the ratio r_d is set to f_ext. This also means that, when the defect number no_f_d of that voxel is greater than or equal to 2, a linear attenuation coefficient obtained by adding the linear attenuation coefficient f_d_l(no_f_d-l, no_e) of the defect with the number no_f_d - 1 at the ratio 1 - r_d and the linear attenuation coefficient f_d_l(no_f_d, no_e) of the defect with the number no_f_d at the ratio r_d is set to f_ext.

In step S212, when a plurality of types of defects 61 are set, in a way similar to that when one type of defect 61 is set, the defect ratio increment is determined for the detector no_d in each scan no_s so that the virtual projection data g_v coincides with the actually measured projection data g(no_s, no_d), and is stored as dr_d(no_s, no_d). When a plurality of types of defects 61 are set, the defect ratio increment is changed in the section of defect ratios, namely, the section of the defect ratios 0.0 to 1.0 for the defect with the number 1 (linear attenuation coefficients in the section of the original linear attenuation coefficient f without a defect to the linear attenuation coefficient f_d_l(1) of the defect with the number 1), and the section of the defect ratios 0.0 to 1.0 for the defect with the number 2 (linear attenuation coefficients in the section of the linear attenuation coefficient f_d_l(1) of the defect with the number 1 to the linear attenuation coefficient f_d_l(2) of the defect with the number 2), and so on. For example, when the increment in the section of the defect ratios 0.0 to 1.0 of the defect with the number 1 is represented as $\alpha$, the increment corresponding to this increment in the section of the defect ratios 0.0 to 1.0 of the defect with the number 2 is represented as $\gamma 2 \times \alpha$, the increment in the section of the defect ratios 0.0 to 1.0 of the defect with the number 3 is represented as $\gamma 3 \times \alpha$, and so on. $\gamma 2$, $\gamma 3$, and so on are conversion ratios of defect ratio increments for the respective sections and are determined so that the total sum value (or mean value) of the amounts of change in linear attenuation coefficient at the respective energies due to the defect ratio increments $\alpha$, $\gamma 2 \times \alpha$, $\gamma 3 \times \alpha$, and so on coincides in the respective sections. Then, the defect ratios for all the voxels (except for air) through which all the paths incident on the detector no_d in each scan no_s pass are changed (increased or decreased) by $\alpha$ according to the following rule for each voxel. If r_d + $\gamma \times \alpha$, which is obtained by changing the current defect ratio r_d by $\gamma \times \alpha$, falls within the range of the defect ratios 0.0 to 1.0, the defect ratio is changed as it is. Note that $\gamma$ is a conversion ratio in the section of the defect ratios 0.0 to 1.0 of the defect number no_f_d in that voxel. If it is smaller than the defect ratio 0.0, when the defect number no_f_d is 1, 0.0 is set, and the linear attenuation coefficient f_ext is not set to a value smaller than the original linear attenuation coefficient f without defects. When the defect number no_f_d is greater than or equal to 2, first, the defect ratio is changed to 0.0 in the section for the defect number no_f_d, and then no_f_d is decreased by 1. In addition, in the section for the defect number decreased by 1, the defect ratio is changed from the defect ratio 1.0 by the remaining amount (obtained by multiplication by the conversion ratio in that section). If it is larger than the defect ratio 1.0, when the defect number no_f_d is num_f_d (maximum), 1.0 is set, and otherwise, first, the defect ratio is changed to 1.0 in the section for the defect number no_f_d. After that, no_f_d is increased by 1. In addition, in the section for the defect number increased by 1, the defect ratio is changed from the defect ratio 0.0 by the remaining amount (obtained by multiplication by the conversion ratio in that section).

In step S218, also when a plurality of types of defects are set, in a way similar to that when one type of defect is set, the tomographic image is updated based on the defect ratio increments dr_d(no_s, 1) to dr_d(no_s, num_d) calculated for all the pieces of projection data belonging to the subset j. In the tomographic image dr_d_ave with the mean value of the increments, increments weighted by the path length are added to each voxel through which all the paths 70 for all the detectors 68 in all the scans belonging to the subset j pass. Finally, the values of the voxels in dr_d_ave are divided by the total sum plen_pix_sub of the path lengths of the voxels to determine the mean value of the increments for the respective voxels, and the mean value is added to the tomographic image r_d before the update to update the tomographic image. When a voxel whose defect number no_f_d is num_f_d (maximum) and whose defect ratio exceeds the maximum value of 1.0 is present as a result of adding the increment dr_d to the defect ratio before the update, the increment for that voxel is corrected so that, as a result of the addition, the defect number no_f_d becomes num_f_d (maximum) and the defect ratio becomes the maximum value of 1.0, and then the corrected increment is added to dr_d_ave. Similarly, when a voxel whose defect number no_f_d is 1 and whose defect ratio becomes smaller than the minimum value of 0.0 is present as a result of adding the increment dr_d to the defect ratio before the update, the increment for that voxel is corrected so that, as a result of the addition, the defect number no_f_d becomes 1 and the defect ratio becomes the minimum value of 0.0, and then the corrected increment is added to dr_d_ave. When a plurality of types of defects are set, the defect type tomographic image no_f_d(no_pix) is also updated together with the defect ratio tomographic image r_d(no_pix).

When a plurality of types of defects are set, a defect is identified based on the defect ratio tomographic image and the defect type tomographic image, including its type and three-dimensional position. For example, in the defect ratio tomographic image, defects can be identified together with their types, such that a region with the defect number 1 and a defect ratio less than a predetermined value (e.g., 0.8) is identified as having no defect, a region with the defect number 1 and a defect ratio greater than or equal to the predetermined value (e.g., 0.8) and a region with the defect number 2 and a defect ratio less than or equal to 0.5 are identified as a defect with the number 1, and a region with the defect number 2 and a defect ratio greater than 0.5 and a region with the defect number 3 and a defect ratio less than or equal to 0.5 are identified as a defect with the number 2. Alternatively, the defects may be identified after being converted to a defect ratio tomographic image that also includes the defect types. For example, in the defect ratio tomographic image, after the addition of 1.0, 2.0, and so on to the defect ratio of voxels with the defect number 2, the defect ratio of voxels with the defect number 3, and so on, respectively, defects can be identified together with their types, such that a region with a defect ratio less than a predetermined value (e.g., 0.8) is identified as having no defect, a region with a defect ratio greater than or equal to the predetermined value (e.g., 0.8) and less than or equal to 1.5 is identified as a defect with the number 1, and a region with a defect ratio greater than 1.5 and less than or equal to 2.5 is identified as a defect with the number 2. Alternatively, after the defects are converted to a defect ratio tomographic image that also includes the defect types, for each defect number, regions within a predetermined range of values centered on the value of the defect ratio (0.0, 1.0, 2.0, etc.) are extracted from the defect ratio tomographic image. Then, joining regions (connected regions) are determined, and, among the joining regions, only a region in which the total sum of the defect ratios in the respective joining regions is greater than or equal to a predetermined value corresponding to each defect number (a region having a large defect ratio value and volume) is identified as a defect with each number. After identified, a defect is displayed so that the three-dimensional position, the size, and the shape of the identified defect, as well as the defect type, can be identified inside the inspection target.

Also in the defect identification process according to the second exemplary embodiment (see Fig. 14), a plurality of types may be set for at least one of the defect with a small linear attenuation coefficient or the defect with a large linear attenuation coefficient. In this case, also in the second exemplary embodiment, a defect type tomographic image no_f_d(no_pix) is also generated together with the defect ratio tomographic image r_d(no_pix). In step S209 of the missing identification process according to the second exemplary embodiment, to determine a gradient by hypothetically increasing the defect ratio of each voxel in a tomographic image by a predetermined amount $\alpha$, the defect ratio r_d of each voxel is hypothetically increased by $\gamma \times \alpha$, which is obtained by multiplying $\alpha$ by the conversion ratio $\gamma$ for the defect number no_f_d of the voxel. As a result of the increase by $\gamma \times \alpha$, if the defect ratio is larger than the defect ratio 1.0, the defect ratio is increased to 1.0 in the section of the defect number no_f_d. After that, no_f_d is increased by 1. In addition, in the section of the defect number increased by 1, the defect ratio is increased by the remaining amount (obtained by multiplication by the conversion ratio in that section). In this way, the defect ratio (and, in some cases, the defect number) is hypothetically increased, and then g_v(no_s, no_d) is determined using each of Formulas (3), (4), and (5_5) above. Then, the evaluation function ef is determined using Formula (6) or (7) above. The evaluation function ef determined from the current tomographic images r_d and no_f_d using Formulas (3), (4), (5_5), and (6) (or Formula (7)) above is subtracted from the determined evaluation function ef to determine the gradient. For a voxel whose defect number no_f_d is num_f_d (maximum) and whose defect ratio exceeds the maximum value of 1.0 as a result of hypothetically increasing the defect ratio by a predetermined amount $\alpha$, the evaluation function ef calculated with the defect number no_f_d set to num_f_d and the defect ratio set to 1.0 - $\gamma \times \alpha$ (where $\gamma$ is the conversion ratio in the section of the defect number num_f_d) is subtracted from the evaluation function ef calculated with the defect number no_f_d set to num_f_d and the defect ratio set to 1.0 for that voxel to determine the gradient.

In step S218 of the defect identification process according to the second exemplary embodiment (see Fig. 14), the tomographic image r_d is updated according to the following rule. The tomographic image r_d is updated as is if, for each voxel no_pix, the defect ratio r_d(no_pix) - $\gamma \times \beta \times \Delta$ef(no_pix) after the update (where $\gamma$ is the conversion ratio in the section of the defect number no_f_d for the voxel) falls within the range of the defect ratios 0.0 to 1.0. If the defect ratio r_d(no_pix) - $\gamma \times \beta \times \Delta$ef(no_pix) after the update is less than the defect ratio 0.0, the tomographic image r_d is updated as follows. When the defect number no_f_d is 1, 0.0 is set, and when the defect number no_f_d is greater than or equal to 2, first, the defect ratio is changed to 0.0 in the section of the defect number no_f_d, and then no_f_d is decreased by 1. In addition, in the section of the defect number decreased by 1, the defect ratio is changed from the defect ratio 1.0 by the remaining amount (obtained by multiplication by the conversion ratio in that section). If the defect ratio r_d(no_pix) - $\gamma \times \beta \times \Delta$ef(no_pix) after the update is greater than the defect ratio 1.0, the tomographic image r_d is updated as follows. When the defect number no_f_d is num_f_d (maximum), 1.0 is set, and otherwise, first, the defect ratio is changed to 1.0 in the section of the defect number no_f_d. After that, no_f_d is increased by 1. In addition, in the section of the defect number increased by 1, the defect ratio is changed from the defect ratio 0.0 by the remaining amount (obtained by multiplication by the conversion ratio in that section). According to the above rule, the defect type tomographic image no_f_d(no_pix) is also updated together with the defect ratio tomographic image r_d(no_pix).

In step S212 of the defect identification process according to the first exemplary embodiment (see Fig. 12), rr_d(no_s, no_d) may be calculated as a ratio of defect ratios instead of the calculation of the defect ratio difference dr_d(no_s, no_d). Specifically, in the generation of a defect ratio tomographic image of a defect with a small linear attenuation coefficient, the virtual projection data g_v and the actually measured projection data g(no_s, no_d) are compared. If the virtual projection data g_v is larger or smaller, the defect ratios for all the voxels through which all the paths incident on the detector no_d in the scan no_s pass are decreased or increased by a predetermined ratio to determine the virtual projection data g_v again, and the determined virtual projection data g_v is compared with the actually measured projection data g(no_s, no_d). This process is repeatedly performed until g_v becomes less than or equal to or greater than or equal to g(no_s, no_d). Then, among the virtual projection data g_v immediately before becoming less than or equal to or greater than or equal to the actually measured projection data g(no_s, no_d) and the virtual projection data g_v that becomes less than or equal to or greater than or equal to the actually measured projection data g(no_s, no_d), the virtual projection data g_v closer to the actually measured projection data g(no_s, no_d) is used. The ratio of the defect ratios during the calculation may be stored as rr_d(no_s, no_d). The decrease or increase by a predetermined ratio means to determine a predetermined increment of the ratio and to perform multiplication while decreasing or increasing the ratio by the increment. For example, this means that a predetermined increment of the ratio is defined as 0.01 and multiplication is performed while decreasing the ratio by 0.99 times, 0.98 times, and so on or increasing the ratio by 1.01 times, 1.02 times, and so on. To calculate the virtual projection data g_v by decreasing or increasing the defect ratio by a ratio $\alpha$, where $\alpha$ denotes a predetermined ratio, in Formula (5) above, r_d(no_pix(no_s, no_d, no_path, no_pix_path)) of f_ext(no_pix_path, no_e) is replaced with $\alpha \times$ r_d(no_pix(no_s, no_d, no_path, no_pix_path)). If a voxel for which $\alpha \times$ r_d(no_pix(no_s, no_d, no_path, no_pix_path)) exceeds the maximum value of 1.0 of the defect ratio is present, the defect ratio for that voxel is fixed to the maximum value of 1.0.

When the ratio rr_d(no_s, no_d) of the defect ratios is calculated, in step S218 of the defect identification process (see Fig. 12), first, the tomographic image with the mean value of ratios is represented as rr_d_ave(no_pix), and rr_d_ave(no_pix) is initialized to zero for all the voxels. Then, for all the pieces of projection data belonging to the subset j, the ratios rr_d(no_s, 1) to rr_d(no_s, num_d) of the defect ratios are weighted by the path lengths and added to the voxels in the tomographic image rr_d_ave with the mean value of ratios. Finally, the values of the voxels in rr_d_ave are divided by the total sum plen_pix_sub of the path lengths of the voxels to determine the mean value of ratios for the respective voxels, and the tomographic image r_d before the update is multiplied by the ratios to update the tomographic image. When the defect ratio rr_d(no_s, no_d) is to be added to each voxel of the tomographic image rr_d_ave with the mean value, if a voxel whose defect ratio exceeds the maximum value as a result of multiplication of the tomographic image r_d before the update by the ratio is present, the ratio for that voxel is corrected so that the multiplication result becomes the maximum value of 1.0, and then the corrected ratio is added to rr_d_ave.

In the defect identification process (see Figs. 12 and 14) according to the exemplary embodiments described above, after the defect ratio tomographic image r_d is generated, or in other words, after the generation of the defect ratio tomographic image is completed with the total update count i exceeding the predetermined number Ni, joining regions (connected regions) whose defect ratios are greater than or equal to a predetermined value (e.g., 0.1) may be determined. Among the connected regions, a region for which at least one of the mean value or the total sum value of defect ratios is greater than or equal to a predetermined value and the total sum value is maximum (a region having a maximum defect ratio value and volume) may be determined (identified) as a defect, the defect ratios for all the voxels in the region may be fixed to 1.0. After that, the process may return to step S206, the total update count i may be reset to 1, and the generation of a defect ratio tomographic image again may be repeated. As described above, the determination (identification) of a defect and the generation of a defect ratio tomographic image may be repeated (the process of determining that a region having a maximum total sum value of defect ratios is a defect, generating a defect ratio tomographic image by fixing, to 1.0, the defect ratio of the region determined to be a defect, determining that a region having a maximum total sum value of defect ratios is a defect, generating a defect ratio tomographic image by fixing, to 1.0, the defect ratio of the region determined to be a defect, and so on is repeated), and the generation of a defect ratio tomographic image may be completed at the point in time when a connected region for which at least one of the mean value or the total sum value of defect ratios is greater than or equal to the predetermined value is no longer found. As described above, the most likely defect is determined, thereby enabling more accurate generation of the remaining defect ratio tomographic images. That is, the determination of the most likely defect and the generation of the remaining defect ratio tomographic images are repeated, thereby enabling more accurate generation of a defect ratio tomographic image and more accurate identification of a defect.

In the defect identification process (see Figs. 12 and 14) according to the exemplary embodiments described above, noise may be reduced from the pieces of actually measured projection data g(no_s, 1) to g(no_s, num_d) to generate a defect ratio tomographic image. Specifically, in the generation of a defect ratio tomographic image of the defect 61 with a small linear attenuation coefficient, among the pieces of actually measured projection data g(no_s, 1) to g(no_s, num_d), for data for which the actually measured projection data g(no_s, no_d) is smaller than the virtual projection data g_v determined from the original attenuation information f(no_f, no_e) and the shape information no_f(no_pix) using Formulas (3) and (4) above and Formula (5) with the defect ratio r_d set to 0, that is, the virtual projection data g_v without a defect, and for data for which even if the actually measured projection data g is larger, the difference therefrom is less than or equal to a predetermined value, that is, data for which the value given by the actually measured projection data g minus the virtual projection data g_v is less than or equal to a predetermined value, the value of the actually measured projection data g is replaced with the value of the virtual projection data g_v in advance. In the generation of a defect ratio tomographic image of a defect with a large linear attenuation coefficient, conversely, for data for which the actually measured projection data g is larger than the virtual projection data g_v without a defect, and for data for which even if the actually measured projection data g is smaller, the difference therefrom is less than or equal to a predetermined value, that is, data for which the value given by the virtual projection data g_v minus the actually measured projection data g is less than or equal to a predetermined value, the value of the actually measured projection data g is replaced with the value of the virtual projection data g_v in advance. In this way, among the pieces of actually measured projection data g(no_s, 1) to g(no_s, num_d), only highly reliable data whose difference from the virtual projection data without a defect is greater than a predetermined value remains, and a low-noise defect ratio tomographic image can be generated based only on the highly reliable projection data. However, it should be noted that if the predetermined value is set to a large value, or in other words, if the difference between the actually measured projection data and the virtual projection data is excessively set to 0, it may be difficult to detect the thin planar defect 61 illustrated in Fig. 2 or the small defect 61 that is not planar.

Among the pieces of actually measured projection data g(no_s, 1) to g(no_s, num_d), only data whose difference from the virtual projection data without a defect is greater than a predetermined value remains. After that, a remaining region containing intersecting or densely packed paths of the radiation R corresponding to pieces of projection data whose differences from the virtual projection data are not zero (paths of the radiation R emitted from the radiation source 64 to the detector no_d corresponding to the pieces of projection data whose differences are not zero, in each scan no_s) may be considered to have a defect, and the three-dimensional position, the shape, and the size of the defect may be identified. In this method, if noise is not reliably eliminated from the respective pieces of actually measured projection data, specifically, if the difference between noise and the virtual projection data is not reliably set to 0, a large number of regions containing intersecting or densely packed paths corresponding to noise may be identified as a large number of incorrect defects. However, when the predetermined value is set to a large value that can reliably eliminate noise in each of the pieces of projection data, the difference caused by the thin planar defect 61 illustrated in Fig. 2 or the small defect 61 that is not planar (the difference between actually measured projection data and virtual projection data without a defect) may also disappear, potentially making it difficult to detect a defect. That is, in this method, the magnitudes of the difference in noise (from the virtual projection data) and the difference in defect are clearly different in each piece of actually measured projection data, and an incorrect defect may be detected or a defect may be undetectable if the difference in defect cannot remain through reliable elimination of the difference in noise by using a predetermined value.

As in the exemplary embodiments described above, by using a method for generating a defect ratio tomographic image such that the differences between pieces of actually measured projection data for respective projection directions and virtual projection data without a defect can match to identify a defect (including the method for reducing noise by using a predetermined value as described above), even a defect difficult to distinguish from noise only in each individual piece of projection data (such as a thin planar defect or a small defect) can be made clear and identified as a region having a defect ratio and a size clearly different from those of noise in a defect ratio tomographic image in which these pieces of projection data are made to match. In addition, the three-dimensional shape of the defect can also be made clear. In addition, compared to conventional techniques of irradiating an inspection target with radiation from a plurality of different directions to acquire projection data and generating a tomographic image of the inspection target to detect a defect, as in the exemplary embodiments described above, the method of identifying a defect such that differences between pieces of actually measured projection data for respective projection directions and virtual projection data can match enables accurate detection of a defect even from a small number of pieces of projection data or projection data with limited projection directions. In particular, even a thin planar defect or a small defect can be accurately detected based on the difference in projection data.

As described above, the projection data includes not only direct radiation emitted from the radiation source and attenuated after passing through the inspection target but also scattered radiation generated as new radiation from a portion of the attenuated direct radiation when the direct radiation is attenuated. A large amount of scattered radiation is included particularly in the cone beam method. Thus, in the exemplary embodiments described above, it is preferable to generate a defect ratio tomographic image by also considering scattered radiation. The probability of occurrence of scattered radiation at each scattering angle is represented by p_s(no_e_in, no_e_out, no_th). no_e_in represents the energy of incident radiation, no_e_out represents the energy of scattered radiation, and no_th represents the angle of the direction of the scattered radiation (hereinafter referred to as the scattering angle) with respect to the direction of the incident radiation (hereinafter referred to as the incident direction). The probability of occurrence p_s represents the likelihood that scattered radiation at the energy no_e_out occurs at the angle no_th with respect to the passage direction when radiation at the energy no_e_in passes a unit travel distance. In the present exemplary embodiment, the energy no_e_in of the incident radiation, the energy no_e_out of the scattered radiation, and the scattering angle no_th are handled discretely and represented as numbers. In Fig. 15, the incident direction is indicated by a thick solid arrow, the direction of the scattered radiation is indicated by a thin solid arrow, the scattering angle is indicated by θ, the direction of the scattered radiation projected onto the plane (xy plane) perpendicular to the incident direction is indicated by a thin wavy arrow, and the angle between the direction of the scattered radiation projected onto the xy plane perpendicular to the incident direction and the x-axis (positive direction) is indicated by φ. As illustrated in Fig. 15, the scattering angle θ is the polar angle (zenith angle) in three-dimensional polar coordinates with the z-axis (positive direction) defined as the incident direction, and the angle φ is the azimuth angle (declination angle). The probability of occurrence p_s is equally probable for the angle φ.

When radiation passes through an inspection target, the probability of occurrence of interactions, such as photoelectric effect, coherent scattering (Thomson scattering), incoherent scattering (Compton scattering), and electron pair generation, changes depending on the energy of the radiation. Moreover, the angular distribution of scattered radiation, that is, the probability of scattering at respective angles, varies depending on the type of interaction. In the present exemplary embodiment, accordingly, the total sum of probabilities of occurrence of scattered radiation at the scattering angle no_th due to the respective interactions, which change depending on the energy no_e_in, is represented as p_s(no_e_in, no_e_out, no_th). That is, the total sum of probabilities of occurrence of scattered radiation at each energy no_e_in due to the respective interactions is represented as one function p_s(no_e_in, no_e_out, no_th). Depending on the type of interaction, the energy changes before and after scattering. For example, in the case of coherent scattering, the energy of incident radiation and the energy of scattered radiation are the same, whereas in the case of incoherent scattering, the energy of incident radiation and the energy of scattered radiation are different, and the energy of scattered radiation differs depending on the scattering angle. In the present exemplary embodiment, accordingly, the probability of occurrence p_s of scattered radiation is represented as a function of the energy no_e_in of incident radiation and the energy no_e_out of scattered radiation. Since the probability of occurrence p_s of scattered radiation differs depending on the members included in the inspection target, in the present exemplary embodiment, each member has a probability of occurrence p_s. The probability of occurrence p_s of scattered radiation may be determined by actually measuring the intensity of scattered radiation at each energy no_e_out and each angle no_th for each member, or may be determined theoretically. For example, in the case of incoherent scattering, the probability of scattering at each angle can be calculated using the Klein-Nishina formula. The probability of occurrence p_s of scattered radiation may be given by any means. For example, the probability of occurrence p_s of scattered radiation may be given by a three-dimensional (no_e_in, no_e_out, no_th) table, or may be given by a function having the three variables no_e_in, no_e_out, and no_th as arguments. In the present exemplary embodiment, the total sum of the probabilities of occurrence of scattered radiation due to the respective interactions is represented as one function p_s, but may also be given by a combination of the probability of occurrence of each interaction at each energy no_e_in and the probability of scattering at each energy no_e_out and each angle no_th when each interaction occurs.

Scattering calculation requires a large amount of computation and takes time. In the present exemplary embodiment, after the imaging position identification step is completed and the imaging positions of the inspection target for the respective pieces of projection data are determined, various tables are generated at the beginning of the defect identification process. Then, scattering calculation is performed. Since the member of each voxel can be determined from the shape information no_f(no_pix) of the inspection target, each voxel can be assigned the probability of occurrence p_s of scattered radiation for a corresponding member, and scattering calculation can be performed. In the scattering calculation, pieces of projection data of scattered radiation are generated as g_s(1, 1) to g_s(num_s, num_d), based on the shape information no_f(no_pix) of the inspection target, the probability of occurrence p_s of scattered radiation for each member, and the imaging positions of the inspection target for the respective pieces of projection data. Then, the calculated pieces of projection data g_s(1, 1) to g_s(num_s, num_d) of the scattered radiation are subtracted from pieces of actually measured projection data g(1, 1) to g(num_s, num_d) to determine the pieces of actually measured projection data of only the direct radiation as g_p(1, 1) to g_p(num_s, num_d). Note that num_s represents the number of scans (number of projection directions). In the defect identification process illustrated in Fig. 12 or 14, a defect ratio tomographic image is generated using the pieces of projection data g_p(1, 1) to g_p(num_s, num_d) of only the direct radiation instead of the pieces of actually measured projection data g(no_s, 1) to g(no_s, num_d). An internal defect included in the inspection target is subtle and has a small influence on scattered radiation generated by the inspection target. Thus, scattering calculation is performed once at the stage where the imaging positions of the inspection target for the respective pieces of projection data are determined.

A method for calculating scattering based on the probability of occurrence p_s(no_e_in, no_e_out, no_th) of scattered radiation for each voxel to generate pieces of projection data g_s(1, 1) to g_s(num_s, num_d) of scattered radiation will be described. As a method for scattering calculation, when only first scattering (hereinafter referred to as first-order scattering) is calculated and multiple scattering (second-, third-, and higher-order scattering) is not calculated, projection data g_s of scattered radiation can be generated as follows. The focus is placed on the (no_pix_path)-th voxel no_pix(no_s, no_d, no_path, no_pix_path) through which the path no_path incident on the detector no_d in the scan no_s passes. The intensity of scattered radiation generated in the voxel no_pix(no_s, no_d, no_path, no_pix_path) during the attenuation of radiation at the energy no_e along the path no_path is represented as I_pix_out(no_e_out, no_th) and given by Formula (9) below.

$$I\_pix\_out(no\_e\_out, no\_th) = I\_pix(no\_e) \times plen\_pix(no\_s, no\_d, no\_path,$$

$$no\_pix\_path) \times p\_s(no\_e, no\_e\_out, no\_th) \ ... \ (9)$$

In Formula (9) above, I_pix(no_e) represents the intensity of radiation at the energy no_e along the path no_path at the time of incidence on the voxel no_pix(no_s, no_d, no_path, no_pix_path). In Formula (9), I_pix_out(no_e_out, no_th) represents the intensity of scattering of radiation with the incident intensity I_pix(no_e) according to the probability p_s (no_e, no_e_out, no_th) that the radiation is scattered at each scattering angle no_th and each energy no_e_out with respect to the incident direction along the path no_path when the radiation is attenuated after passing along the path no_path a path length plen_pix(no_s, no_d, no_path, no_pix_path). It should be noted that in Formula (9) above, the scattering angle no_th is the polar angle (zenith angle) of the path no_path with respect to the incident direction. In Formula (9), the scattering probability p_s (no_e, no_e_out, no_th) is equally probable for the azimuth angle (declination angle). As a result, the scattering intensity I_pix_out(no_e_out, no_th) has the same intensity for the azimuth angle (declination angle). In the calculation of the scattering intensity I_pix_out(no_e_out, no_th) for incident radiation at the energy no_e using Formula (9), the calculation may be omitted for a combination of no_e_out and no_th for which the scattering probability p_s(no_e, no_e_out, no_th) is zero. After determining the intensity I_pix_out(no_e_out, no_th) of scattered radiation at each energy no_e_out and each scattering angle no_th using Formula (9), it is possible to perform a geometric calculation based on the path no_path in the voxel no_pix(no_s, no_d, no_path, no_pix_path) and the positional relationship between the detectors 1 to num_d in the scan no_s to identify a detector on which each scattered radiation is incident (assuming that each scattered radiation does not undergo multiple scattering (second- and higher-order scattering)) among the detectors 1 to num_d. Similarly, it is possible to perform a geometric calculation to determine the voxels and the path lengths for the voxels through which each scattered radiation passes until reaching the detector after generated at the scattering angle no_th from the path no_path in the voxel no_pix(no_s, no_d, no_path, no_pix_path). Thus, based on the attenuation coefficient and the path length at each energy no_e_out in each voxel through which the scattered radiation passes, the intensity when scattered radiation generated at each energy no_e_out and each scattering angle no_th is attenuated and incident on the detector can be determined. In the cone beam method, scattered radiation generated in the path of direct radiation incident on the detector no_d can be detected by all the detectors 1 to num_d, whereas, for example, in the pencil beam method, the scattered radiation can be detected only by the detector no_d. In the fan beam method, the scattered radiation can be detected only by one-dimensionally arranged detectors to which the detector no_d belongs. In consideration of the limitation of detectors that can detect the scattered radiation by the scan method, when the detector on which scattered radiation generated in the path of direct radiation incident on the detector no_d is incident is to be identified, a detector from which the scattered radiation can be detected is limited based on the detector number no_d, and then the identification is performed. Through the calculation described above, the intensity at which scattered radiation generated during the attenuation of radiation at the energy no_e along the path no_path is incident on each detector can be determined for the (no_pix_path)-th voxel no_pix(no_s, no_d, no_path, no_pix_path) through which the path no_path incident on the detector no_d in the scan no_s passes. In a similar way, calculation can be performed for all the energies 1 to num_e, calculation can be performed for all the voxels 1 to num_pix(no_s, no_d, no_path), calculation can be performed for all the paths 1 to num_path(no_s, no_d), and calculation can be performed for all the detectors 1 to num_d. Through the calculations described above, the total sum of intensities of scattered radiation incident on the detectors 1 to num_d in the scan no_s can be determined for each of the energies 1 to num_e. By multiplying, for the detectors 1 to num_d in the scan no_s, the intensities of scattered radiation at each energy by each energy and then summing them, the detected intensities, that is, pieces of projection data g_s(no_s, 1) to g_s(no_s, num_d), can be generated (see Formula (1) or (4) above). In the summing of the intensities of scattered radiation at each energy, the detection efficiency of the detector may be reflected (see Formula (1_5) or (4_5) above). In a similar way, the pieces of projection data g_s(1, 1) to g_s(num_s, num_d) in all the scans can be generated. A detector on which each scattered radiation generated along the path of direct radiation is incident, the voxels through which each scattered radiation passes until reaching the detector, the path lengths in those voxels, and the like may be determined in advance and tabulated. The pieces of projection data g_s(1, 1) to g_s(num_s, num_d) of only first-order scattered radiation can be generated by the method described above. Alternatively, the pieces of projection data g_s(1, 1) to g_s(1, num_d), g_s(2, 1) to g_s(2, num_d), and so on in the respective scans may be blurred for each scan to virtually generate projection data of multiple-scattered radiation (second-order scattered radiation, third-order scattered radiation, etc.), and the generated projection data may then be added to the original projection data to convert g_s(1, 1) to g_s(num_s, num_d) into projection data of first-order scattered radiation + multiple-scattered radiation.

The degree of blurring of projection data varies depending on the scan method. For example, in the fan beam method, in each scan, the two-dimensional projection data of the detectors 1 to num_d is more strongly blurred in a one-dimensional direction corresponding to the same beam (radiation source) than in the direction orthogonal to the one-dimensional direction. Here, while each piece of one-dimensional data is data of first-order scattered radiation generated by a different beam, particularly pieces of data generated by beams close to each other are considered as pieces of data of first-order scattered radiation generated by approximately the same beam and are also blurred in the direction orthogonal to the one-dimensional direction (blurred two-dimensionally). In the pencil beam method, in each scan, the two-dimensional projection data of the detectors 1 to num_d is more weakly blurred two-dimensionally than in the cone beam method or the fan beam method. Here, while each piece of data is data of first-order scattered radiation generated by a different beam, particularly pieces of data generated by beams close to each other are considered as pieces of data of first-order scattered radiation generated by approximately the same beam and are blurred two-dimensionally.

A method for performing calculation of multiple scattering as well as first-order scattering based on the probability of occurrence p_s(no_e_in, no_e_out, no_th) of scattered radiation for each voxel to generate pieces of projection data g_s(1, 1) to g_s(num_s, num_d) will be described. In a case where multiple scattering is also included, projection data can be generated by Monte Carlo simulation. Specifically, a large number of photons of radiation at respective energies no_e are emitted from the radiation source 64 in each direction, and it is sequentially determined, for each photon, whether the photon is to travel straight or to be absorbed or scattered each time the photon is advanced a free path length, based on the linear attenuation coefficient and the probability of occurrence p_s(no_e_in, no_e_out, no_th) of scattered radiation for each voxel 74. When scattering each photon, it is possible to repeatedly determine in which direction to scatter the photon until the photon reaches the detector 68, thereby generating the pieces of projection data g_s(1, 1) to g_s(num_s, num_d). It should be noted that the settings of the radiation source 64 and the detector 68 from which scattered radiation can be detected differ depending on the scan methods such as the pencil beam method, the fan beam method, and the cone beam method.

In the exemplary embodiments described above, the attenuation of the radiation R in a region other than the region of the inspection target 60 (a region outside the inspection target 60) is not considered in both the imaging position identification process and the defect identification process. The region outside the inspection target 60 is filled with a substance corresponding to the environment in which the inspection target 60 is present, and the linear attenuation coefficient thereof is known. At each imaging position, for each path 70 along which radiation emitted from the radiation source 64 is incident on each detector 68, the path length from the radiation source 64 to the region of the inspection target 60 and the path length from the region of the inspection target 60 to the detector 68 can be determined. Thus, virtual projection data can be more accurately determined from these pieces of information. For example, assuming that the region outside the inspection target 60 is filled with air, the attenuation in the region outside the inspection target 60 can be calculated based on the linear attenuation coefficient of air to more accurately determine virtual projection data. As a result, it is possible to more accurately identify an imaging position and more accurately generate a defect ratio tomographic image to identify a defect. Note that whether or not the attenuation in the region outside the inspection target 60 is calculated is considered to have a slight effect on the accuracy of identifying an imaging position and the defect 61.

In the above embodiments, the hardware structures of processing units that perform various processes, such as the first acquisition unit 40, the imaging position identification unit 42, the first virtual projection data generation unit 44, the second acquisition unit 50, the defect identification unit 52, and the second virtual projection data generation unit 54, may be implemented using various processors described below. As described above, the various processors described above include a CPU that is a general-purpose processor configured to execute software (program) to function as various processing units, and further include a programmable logic device (PLD) that is a processor whose circuit configuration can be changed after manufacturing, such as a field programmable gate array (FPGA), a dedicated electric circuit that is a processor having a circuit configuration designed exclusively for executing specific processing, such as an application specific integrated circuit (ASIC), and so on.

One processing unit may be constituted by one of these various processors, or may be constituted by a combination of two or more processors of the same type or different types (e.g., a combination of a plurality of FPGAs or a combination of a CPU and an FPGA). Alternatively, a plurality of processing units may be configured as a single processor.

Examples of configuring a plurality of processing units by one processor include, first, a form in which, as typified by a computer such as a client and a server, one processor is configured by a combination of one or more CPUs and software and the processor functions as a plurality of processing units. The examples include, second, a form in which, as typified by a system on chip (SoC) or the like, a processor is used in which the functions of the entire system including the plurality of processing units are implemented as one integrated circuit (IC) chip. As described above, the various processing units are configured by using one or more of the various processors described above as a hardware structure.

More specifically, the hardware structure of these various processors may be an electric circuit (circuitry) in which circuit elements such as semiconductor elements are combined.

The exemplary embodiments described above have described an aspect in which the imaging position identification program 30 and the defect identification program 32 are stored (installed) in the storage unit 24 of the information processing apparatus 10 in advance, but this is not meant to be limiting. Each of the imaging position identification program 30 and the defect identification program 32 may be provided in a form recorded on recording media such as a compact disc read only memory (CD-ROM), a digital versatile disc read only memory (DVD-ROM), and a universal serial bus (USB) memory. Alternatively, in an embodiment, each of the imaging position identification program 30 and the defect identification program 32 may be downloaded from an external device via a network.

From the foregoing description, the invention described in the following appendices can be understood.

Appendix 1

An information processing apparatus including at least one processor, the processor being configured to:

acquire projection data obtained by irradiating an inspection target with radiation; and
identify an imaging position of the projection data, based on the projection data, attenuation information of the inspection target, and shape information of the inspection target.

Appendix 2

The information processing apparatus according to Appendix 1, wherein
the processor being configured to:

generate virtual projection data obtained when inspection target is irradiated with the radiation, based on the attenuation information and the shape information of the inspection target; and
identify the imaging position of the projection data, based on the projection data and the virtual projection data.

Appendix 3

The information processing apparatus according to Appendix 2, wherein

the processor being configured to
identify the imaging position of the projection data, based on a similarity between the projection data and the virtual projection data.

Appendix 4

The information processing apparatus according to Appendix 1 or 2, wherein

the processor being configured to
generate the virtual projection data, based on a scattered radiation component produced by the inspection target.

Appendix 5

The information processing apparatus according to any one of Appendices 2 to 4, wherein

the processor being configured to
remove a low-frequency component from each of the projection data and the virtual projection data.

Appendix 6

The information processing apparatus according to any one of Appendices 2 to 5, wherein

the processor being configured to
generate the virtual projection data, based on a length of a path along which the radiation is transmitted through the inspection target.

Appendix 7

The information processing apparatus according to any one of Appendices 1 to 6, wherein
the attenuation information includes attenuation information corresponding to each of at least two members included in inspection target.

Appendix 8

The information processing apparatus according to any one of Appendices 1 to 7, wherein the attenuation information includes attenuation information of air.

Appendix 9

The information processing apparatus according to any one of Appendices 1 to 8, wherein the attenuation information includes attenuation information for at least two energy bands.

Appendix 10

An information processing method including a process performed by a processor, the process including

acquiring projection data obtained by irradiating an inspection target with radiation; and
identifying an imaging position of the projection data, based on the projection data, attenuation information of the inspection target, and shape information of the inspection target.

Appendix 11

An information processing program for causing a processor to perform a process including

acquiring projection data obtained by irradiating an inspection target with radiation; and
identifying an imaging position of the projection data, based on the projection data, attenuation information of the inspection target, and shape information of the inspection target.

The disclosure of JP2023-008367 filed on January 23, 2023 is incorporated herein by reference in its entirety.
All publications, patent applications, and technical standards described herein are incorporated herein by reference to the same extent as if each individual publication, patent application, or technical standard were specifically and individually indicated to be incorporated by reference.

**Claims**

1. An information processing apparatus comprising at least one processor, the processor being configured to:

   acquire projection data obtained by irradiating an inspection target with radiation; and
   identify an imaging position of the projection data, based on the projection data, attenuation information of the inspection target, and shape information of the inspection target.

2. The information processing apparatus according to claim 1, wherein the processor being configured to:

   generate virtual projection data obtained when inspection target is irradiated with the radiation, based on the attenuation information and the shape information of the inspection target; and
   identify the imaging position of the projection data, based on the projection data and the virtual projection data.

3. The information processing apparatus according to any one of claim 2, wherein the processor being configured to identify the imaging position of the projection data, based on a similarity between the projection data and the virtual projection data.

4. The information processing apparatus according to claim 2, wherein

   the processor being configured to
   generate the virtual projection data, based on a scattered radiation component produced by the inspection target.

5. The information processing apparatus according to claim 2, wherein the processor being configured to remove a low-frequency component from each of the projection data and the virtual projection data.

6. The information processing apparatus according to claim 2, wherein the processor being configured to generate the virtual projection data, based on a length of a path along which the radiation is transmitted through the inspection target.

7. The information processing apparatus according to claim 1, wherein the attenuation information includes attenuation information corresponding to each of at least two members included in inspection target.

8. The information processing apparatus according to claim 1, wherein the attenuation information includes attenuation information of air.

9. The information processing apparatus according to claim 1, wherein the attenuation information includes attenuation information for at least two energy bands.

10. An information processing method comprising a process performed by a processor, the process comprising:

   acquiring projection data obtained by irradiating an inspection target with radiation; and
   identifying an imaging position of the projection data, based on the projection data, attenuation information of the inspection target, and shape information of the inspection target.

11. An information processing program for causing a processor to perform a process comprising:

   acquiring projection data obtained by irradiating an inspection target with radiation; and
   identifying an imaging position of the projection data, based on the projection data, attenuation information of the inspection target, and shape information of the inspection target.

FIG. 1

68

60

61

R

64

10

INFORMATION
PROCESSING
APPARATUS

FIG. 2

z

61

60

y

x

FIG. 3

FIG. 4

## FIG. 5

```
        START
          ↓
┌─────────────────────────────────┐
│ IMAGING POSITION IDENTIFICATION │ ──S10
│           PROCESS               │
└─────────────────────────────────┘
          ↓
┌─────────────────────────────────┐
│   DEFECT IDENTIFICATION PROCESS │ ──S12
└─────────────────────────────────┘
          ↓
        END
```

## FIG. 6

```
┌──────────────────────────────────────────────────────────────┐ ─10
│                                  ┌──────────────────────────┐  │
│                                  │ IMAGING POSITION         │ ─42
│                                  │ IDENTIFICATION UNIT      │  │
│     ┌──────────────────┐         │ ┌──────────────────────┐ │  │
│     │ FIRST ACQUISITION│─────────┤ │ FIRST VIRTUAL        │ ─44
│     │      UNIT        │         │ │ PROJECTION DATA      │ │  │
│     └──────────────────┘         │ │ GENERATION UNIT      │ │  │
│                                  │ └──────────────────────┘ │  │
│                                  └──────────────────────────┘  │
│                          INFORMATION PROCESSING APPARATUS       │
└──────────────────────────────────────────────────────────────┘
```

## FIG. 7

```
         START IMAGING POSITION
         IDENTIFICATION PROCESS
                   ↓
┌──────────────────────────────────────┐
│        ACQUIRE PROJECTION DATA        │ ──S100
└──────────────────────────────────────┘
                   ↓
┌──────────────────────────────────────┐
│   SET INITIAL VIRTUAL IMAGING POSITION│ ──S102
└──────────────────────────────────────┘
                   ↓
┌──────────────────────────────────────┐
│     GENERATE VIRTUAL PROJECTION DATA  │ ──S104
└──────────────────────────────────────┘
                   ↓
┌──────────────────────────────────────┐
│ CALCULATE SIMILARITY BETWEEN ACTUALLY │
│ MEASURED PROJECTION DATA AND VIRTUAL  │ ──S106
│         PROJECTION DATA               │
└──────────────────────────────────────┘
                   ↓
        N    ◇ SIMILARITY > THRESHOLD VALUE? ◇ ──S108
        ↓              ↓ Y
┌──────────────┐  ┌──────────────────────────┐
│UPDATE VIRTUAL│  │  VIRTUAL IMAGING POSITION=│ ──S112
│IMAGING       │  │  ACTUAL IMAGING POSITION  │
│POSITION      │  └──────────────────────────┘
└──────────────┘         ↓
  ──S110               END
```

FIG. 8A

FIG. 8B

FIG. 8C

FIG. 9

FIG. 10A

FIG. 10B

FIG. 11

FIG. 12

```
                    ┌─────────────┐
                    │    START    │
                    └──────┬──────┘
                           ↓
    ┌──────────────────────────────────────────────┐
    │           ACQUIRE PROJECTION DATA             │──S200
    └──────────────────────┬───────────────────────┘
                           ↓
    ┌──────────────────────────────────────────────┐
    │             DIVIDE INTO SUBSETS               │──S202
    └──────────────────────┬───────────────────────┘
                           ↓
    ┌──────────────────────────────────────────────┐
    │  GENERATE INITIAL DEFECT RATIO TOMOGRAPHIC IMAGE │──S204
    └──────────────────────┬───────────────────────┘
                           ↓
    ┌──────────────────────────────────────────────┐
    │            UPDATE COUNT i = 1                 │──S206
    └──────────────────────┬───────────────────────┘
                           ↓
    ┌──────────────────────────────────────────────┐
    │            SUBSET NUMBER j = 1                │──S208
    └──────────────────────┬───────────────────────┘
                           ↓
    ┌──────────────────────────────────────────────┐
    │        PROJECTION DATA NUMBER k = 1          │──S210
    └──────────────────────┬───────────────────────┘
                           ↓
    ┌──────────────────────────────────────────────┐
    │ CALCULATE DEFECT RATIO OF DEFECT RATIO TOMOGRAPHIC IMAGE │──S212
    │ BASED ON PROJECTION DATA AND VIRTUAL PROJECTION DATA │
    └──────────────────────┬───────────────────────┘
                           ↓
    ┌──────────────────────────────────────────────┐
    │                k = k + 1                      │──S214
    └──────────────────────┬───────────────────────┘
                           ↓
         N            ╱─────────────╲
       ┌─────────────┤    k > Nk?    │──S216
       │              ╲─────────────╱
       │                    │ Y
       │                    ↓
       │  ┌──────────────────────────────────────────┐
       │  │     UPDATE DEFECT RATIO TOMOGRAPHIC IMAGE │──S218
       │  └──────────────────┬───────────────────────┘
       │                     ↓
       │  ┌──────────────────────────────────────────┐
       │  │              j = j + 1                    │──S220
       │  └──────────────────┬───────────────────────┘
       │                     ↓
       │       N        ╱─────────────╲
       │     ┌─────────┤    j > Nj?    │──S222
       │     │          ╲─────────────╱
       │     │                │ Y
       │     │                ↓
       │     │  ┌──────────────────────────────────────┐
       │     │  │            i = i + 1                  │──S224
       │     │  └──────────────┬───────────────────────┘
       │     │                 ↓
       │     │     N       ╱─────────────╲
       │     │   ┌────────┤    i > Ni?    │──S226
       │     │   │         ╲─────────────╱
       │     │   │               │ Y
       │     │   │               ↓
       │     │   │  ┌──────────────────────────────────────┐
       │     │   │  │  IDENTIFY AND DISPLAY DEFECT BASED ON │──S228
       │     │   │  │    DEFECT RATIO TOMOGRAPHIC IMAGE     │
       │     │   │  └──────────────┬───────────────────────┘
       │     │   │                 ↓
       │     │   │          ┌─────────────┐
       │     │   │          │     END     │
       │     │   │          └─────────────┘
```

# FIG. 13

| PROJECTION ANGLE | SCAN NUMBER | NUMBER OF SUBSETS: 1 | | NUMBER OF SUBSETS: 2 | | NUMBER OF SUBSETS: 4 | |
|---|---|---|---|---|---|---|---|
| | | SUBSET NUMBER | PROJECTION DATA NUMBER | SUBSET NUMBER | PROJECTION DATA NUMBER | SUBSET NUMBER | PROJECTION DATA NUMBER |
| 0° | 1 | 1 | 1 | 1 | 1 | 1 | 1 |
| 45° | 2 | 1 | 2 | 2 | 1 | 3 | 1 |
| 90° | 3 | 1 | 3 | 1 | 2 | 2 | 1 |
| 135° | 4 | 1 | 4 | 2 | 2 | 4 | 1 |
| 180° | 5 | 1 | 5 | 1 | 3 | 1 | 2 |
| 225° | 6 | 1 | 6 | 2 | 3 | 3 | 2 |
| 270° | 7 | 1 | 7 | 1 | 4 | 2 | 2 |
| 315° | 8 | 1 | 8 | 2 | 4 | 4 | 2 |

**FIG. 14**

START

ACQUIRE PROJECTION DATA — S200

DIVIDE INTO SUBSETS — S202

GENERATE INITIAL DEFECT RATIO TOMOGRAPHIC IMAGE — S204

UPDATE COUNT i = 1 — S206

SUBSET NUMBER j = 1 — S208

CALCULATE GRADIENT BASED ON PROJECTION DATA IN SUBSET j — S209

UPDATE DEFECT RATIO TOMOGRAPHIC IMAGE — S218

j = j + 1 — S220

j > Nj? — S222  N / Y

i = i + 1 — S224

i > Ni? — S226  N / Y

IDENTIFY AND DISPLAY DEFECT BASED ON DEFECT RATIO TOMOGRAPHIC IMAGE — S228

END

**FIG. 15**

## INTERNATIONAL SEARCH REPORT

| International application No. |
|---|
| **PCT/JP2024/000434** |

### A. CLASSIFICATION OF SUBJECT MATTER

*G01N 23/18*(2018.01)i; *G01N 23/046*(2018.01)i; *G01N 23/087*(2018.01)i
FI:  G01N23/18; G01N23/087; G01N23/046

According to International Patent Classification (IPC) or to both national classification and IPC

### B. FIELDS SEARCHED

Minimum documentation searched (classification system followed by classification symbols)

  G01N23/00-23/2276; A61B6/00-6/58

Documentation searched other than minimum documentation to the extent that such documents are included in the fields searched

  Published examined utility model applications of Japan 1922-1996
  Published unexamined utility model applications of Japan 1971-2024
  Registered utility model specifications of Japan 1996-2024
  Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2014-62743 A (HITACHI, LTD.) 10 April 2014 (2014-04-10)<br>  claim 1, paragraphs [0012]-[0037], fig. 1-3, 6, 12-15 | 1-11 |
| Y | JP 2009-189557 A (KABUSHIKI KAISHA TOSHIBA) 27 August 2009 (2009-08-27)<br>  claims 1-2, paragraphs [0005]-[0006] | 1-11 |
| Y | JP 2007-14435 A (FUJIFILM HOLDINGS CORP.) 25 January 2007 (2007-01-25)<br>  claim 1, paragraphs [0028]-[0029] | 1-11 |
| Y | JP 2013-205267 A (HITACHI-GE NUCLEAR ENERGY LTD.) 07 October 2013<br>(2013-10-07)<br>  claim 1, paragraph [0009] | 4 |
| A | JP 2019-58480 A (HAMAMATSU PHOTONICS KK) 18 April 2019 (2019-04-18)<br>  entire text, all drawings | 1-11 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/000434**

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2005-95397 A (GE MEDICAL SYSTEMS GLOBAL TECHNOLOGY CO. LLC) 14 April 2005 (2005-04-14)<br>entire text, all drawings | 1-11 |
| A | WO 2015/064446 A1 (HITACHI MEDICAL CORPORATION) 07 May 2015 (2015-05-07)<br>entire text, all drawings | 1-11 |
| A | US 2017/0023496 A1 (PRISMATIC SENSORS AB) 26 January 2017 (2017-01-26)<br>entire text, all drawings | 1-11 |

Form PCT/ISA/210 (second sheet) (July 2022)

## INTERNATIONAL SEARCH REPORT
### Information on patent family members

| International application No. |
| --- |
| **PCT/JP2024/000434** |

| Patent document cited in search report | | | Publication date (day/month/year) | Patent family member(s) | | | Publication date (day/month/year) |
| --- | --- | --- | --- | --- | --- | --- | --- |
| JP | 2014-62743 | A | 10 April 2014 | US | 2014/0079180 | A1 | |
| | | | | claim 1, paragraphs [0027]-[0050], fig. 1-3, 6, 9-12 | | | |
| | | | | EP | 2711695 | A1 | |
| JP | 2009-189557 | A | 27 August 2009 | US | 2009/0207965 | A1 | |
| | | | | claims 1-2, paragraphs [0008]-[0009] | | | |
| | | | | CN | 101507612 | A | |
| JP | 2007-14435 | A | 25 January 2007 | (Family: none) | | | |
| JP | 2013-205267 | A | 07 October 2013 | (Family: none) | | | |
| JP | 2019-58480 | A | 18 April 2019 | (Family: none) | | | |
| JP | 2005-95397 | A | 14 April 2005 | (Family: none) | | | |
| WO | 2015/064446 | A1 | 07 May 2015 | US | 2016/0199018 | A1 | |
| | | | | CN | 105451659 | A | |
| US | 2017/0023496 | A1 | 26 January 2017 | WO | 2015/156711 | A1 | |
| | | | | EP | 3129957 | A1 | |
| | | | | CN | 106233335 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014016239 A
- JP 2023008367 A